(19)

Europäisches
Patentamt
European
Patent Office
Office européen
des brevets

(11) **EP 4 421 112 A1**

(12) **EUROPEAN PATENT APPLICATION**
published in accordance with Art. 153(4) EPC

(43) Date of publication:
**28.08.2024 Bulletin 2024/35**

(21) Application number: **23866694.5**

(22) Date of filing: **23.08.2023**

(51) International Patent Classification (IPC):
$C08J\ 3/215^{(2006.01)}$  $C08J\ 5/00^{(2006.01)}$
$C08L\ 67/04^{(2006.01)}$  $C08K\ 3/04^{(2006.01)}$
$C08K\ 7/26^{(2006.01)}$  $C08K\ 3/22^{(2006.01)}$
$C08K\ 3/38^{(2006.01)}$  $C08K\ 3/28^{(2006.01)}$
$C08K\ 3/14^{(2006.01)}$  $C08L\ 1/02^{(2006.01)}$
$C08K\ 5/09^{(2006.01)}$  $C08K\ 5/098^{(2006.01)}$

(86) International application number:
**PCT/CN2023/114498**

(87) International publication number:
**WO 2024/148825 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.01.2023 CN 202310023114**

(71) Applicant: **Beijing Phabuilder Biotechnology Co.,
Ltd.**
**Beijing 101300 (CN)**

(72) Inventors:
• **WU, Yuhe**
  **Shunyi District**
  **Beijing 101300 (CN)**
• **XU, Xiangdong**
  **Shunyi District**
  **Beijing 101300 (CN)**

• **OUYANG, Yunyun**
  **Shunyi District**
  **Beijing 101300 (CN)**
• **DENG, Tiejun**
  **Shunyi District**
  **Beijing 101300 (CN)**
• **XUE, Ming**
  **Shunyi District**
  **Beijing 101300 (CN)**
• **ZHANG, Tao**
  **Shunyi District**
  **Beijing 101300 (CN)**
• **YANG, Jishuai**
  **Shunyi District**
  **Beijing 101300 (CN)**

(74) Representative: **HGF**
  **HGF Limited**
  **1 City Walk**
  **Leeds LS11 9DX (GB)**

(54) **METHOD FOR MODIFYING POLYHYDROXYALKANOATE**

(57)    The present invention provides a modification method of polyhydroxyalkanoate (PHA), which comprises the following steps: dispersing nanoparticles into a liquid phase environment, adding the PHA, and blending at a high speed to modify, and simultaneously, combining with the extraction process of the PHA, namely continuously and integrally performing extraction and modification, and achieving high-purity extraction and reinforcing and toughening modification of the PHA by a one-step method. The PHA material obtained by the method can be directly applied to multiple fields without subsequent modification processing.

EP 4 421 112 A1

## Description

### TECHNICAL FIELD

The present invention relates to the field of modification of degradable materials, and in particular, to a modification method for a polyhydroxyalkanoate.

### BACKGROUND

Polyhydroxyalkanoates (PHAs), as a marine-degradable and biocompatible polymer material with good performance, have a wide application prospect. However, due to the narrow thermal processing window, poor thermal stability and serious post-crystallization phenomenon of PHAs, the performance of PHAs is difficult to meet the actual requirements, and thus modification processing is required to make up for the disadvantages.

In addition, the PHAs produced by microbial fermentation can be extracted by aqueous-phase methods or solvent methods. Either way, the subsequent modification processing is performed only after powders or floccules are obtained from drying processing, and also, processes such as melting granulation are often required. Continuous integration of extraction and modification steps has not been reported yet. According to the practical research and application results, various auxiliary agents and addition amounts suitable for polyesters or other degradable materials may not necessarily improve the corresponding performance of the PHAs. After PHAs are physically blended and modified with an auxiliary agent, particularly a nanoscale material, as the agglomeration phenomenon of nanoparticles cannot be fundamentally solved, an ideal effect is often difficult to acquire, and most nanoparticles are dispersed into PHAs in the form of agglomerates rather than nanoscale ultrafine particles, so the processing performance of PHAs is not significantly improved, and the mechanical property of PHAs is not improved. This difficulty not only results in waste of auxiliary agent materials, but also limits the application range of PHAs. However, as the development of a novel modification auxiliary agent involves great difficulty, a long period and a limited material application range, a novel modification method is required to improve the performance of PHAs.

### SUMMARY

In order to solve the above technical problems, the present application provides a liquid phase blending modification method for a polyhydroxyalkanoate (PHA), in which the PHA is modified by dispersing nanoparticles into a liquid phase environment, and meanwhile, the modification process can be combined with an extraction process of a PHA obtained by microbial fermentation; namely, the extraction and modification are performed continuously and integrally, and the high-purity extraction and the reinforcing and toughening modification of a PHA are achieved by a one-step method. The modified PHA material obtained by the method can be directly applied to various fields without subsequent modification processing. The present invention provides a modification method for a polyhydroxyalkanoate, wherein the modification method comprises adding a modifier into a polyhydroxyalkanoate liquid phase dispersion, a preparation method for the polyhydroxyalkanoate liquid phase dispersion comprises performing wall-breaking processing on bacteria in a polyhydroxyalkanoate fermentation broth.

Preferably, the polyhydroxyalkanoate liquid phase dispersion is obtained by performing wall-breaking processing on the bacteria in the polyhydroxyalkanoate fermentation broth. Namely, the polyhydroxyalkanoate liquid phase dispersion may be a fermentation broth obtained by performing wall-breaking processing on the bacteria.

The wall-breaking processing may be performed by using physical, chemical and/or biological methods. The physical methods include, but are not limited to, ultrasound methods, pressurization and heating methods, mechanical crushing methods, and the like. The chemical methods include, but are not limited to, organic solvent methods, surfactant methods, alkaline methods, and the like. The biological methods include, but are not limited to, enzymolysis. the enzyme includes, but is not limited to, lysozyme, nucleic acid degrading enzyme, dextranase, mannanase, snailase, protease, and the like.

The ratio of the polyhydroxyalkanoate to the modifier in parts by mass is in the range of 5:1 to 50000: 1.

Preferably, the pH of the polyhydroxyalkanoate liquid phase dispersion is 1.5 to 8.5. The modifier comprises nanoparticles and/or an auxiliary agent.

The modification method comprises:

A) dispersing the nanoparticles into a liquid phase environment to obtain a nanoparticle liquid phase dispersion, and subsequently dispersing the nanoparticle liquid phase dispersion into the polyhydroxyalkanoate liquid phase dispersion; or
B) directly dispersing the nanoparticles into the polyhydroxyalkanoate liquid phase dispersion.

The present invention provides a modification method for a polyhydroxyalkanoate, which comprises:

a) dispersing nanoparticles into a liquid phase environment to obtain a nanoparticle liquid phase dispersion, and subsequently dispersing the polyhydroxyalkanoate into the nanoparticle liquid phase dispersion; or

b) dispersing nanoparticles into a liquid phase environment to obtain a nanoparticle liquid phase dispersion, dispersing the polyhydroxyalkanoate into a liquid phase environment to obtain a polyhydroxyalkanoate liquid phase dispersion, and subsequently dispersing the nanoparticle liquid phase dispersion into the polyhydroxyalkanoate liquid phase dispersion.

Preferably, 0.00005 parts to 15 parts (preferably any value of 0.0001 to 1, e.g., 0.00005, 0.0001, 0.0005, 0.001, 0.005, 0.01, 0.05, 0.1, 0.5, 1, 1.5, 2, 2.5, 3, 3.5, 4, 4.5, 5, 6, 7, 8, 9, 10, 11, 12, 13, 14, or 15 parts) of the nanoparticles are dispersed into the liquid phase environment, based on 100 parts by mass of the liquid phase environment, to obtain the nanoparticle liquid phase dispersion.

Preferably, 1 part to 50 parts (preferably any value of 5 to 40, e.g., 1, 5, 10, 15, 20, 25, 28, 30, 35, 40, 45, or 50 parts) of the polyhydroxyalkanoate is dispersed into the nanoparticle liquid phase dispersion.

Preferably, 0.5 parts to 60 parts (preferably, any value of 0.5 to 50 or 5 to 40, e.g., 1, 5, 10, 15, 20, 25, 30, 35, 40, 45, 50, 55, or 60 parts) of the polyhydroxyalkanoate is dispersed into the liquid phase environment, based on 100 parts by mass of the liquid phase environment, to obtain the polyhydroxyalkanoate liquid phase dispersion.

Preferably, 0.5 parts to 120 parts (preferably 1 to 100, e.g., 0.5, 1, 5, 8, 10, 15, 20, 25, 30, 35, 40, 45, 50, 55, 60, 65, 70, 75, 80, 85, 90, 95, 100, 105, 110, 115, or 120 parts) of the nanoparticle liquid phase dispersion is dispersed into the polyhydroxyalkanoate liquid phase dispersion, based on 100 parts by mass of the polyhydroxyalkanoate liquid phase dispersion.

A preparation method for the polyhydroxyalkanoate comprises performing wall-breaking processing on the bacteria in the polyhydroxyalkanoate fermentation broth.

Preferably, the polyhydroxyalkanoate is obtained by performing wall-breaking processing on the bacteria in the polyhydroxyalkanoate fermentation broth. Preferably, a preparation method for the polyhydroxyalkanoate liquid phase dispersion comprises separating bacteria from a polyhydroxyalkanoate fermentation broth, performing wall-breaking processing and solid-liquid separation to obtain precipitates, and dispersing the obtained precipitates into a liquid phase environment. The wall-breaking processing may be performed by using physical, chemical and/or biological methods. The physical methods include, but are not limited to, ultrasound methods, pressurization and heating methods, mechanical crushing methods, and the like. The chemical methods include, but are not limited to, organic solvent methods, surfactant methods, alkaline methods, and the like. The biological methods include, but are not limited to, enzymolysis. the enzyme includes, but is not limited to, lysozyme, nucleic acid degrading enzyme, dextranase, mannanase, snailase, protease, and the like.

Preferably, the liquid phase environment includes, but is not limited to, one or a combination of two or more of water, ethanol, ethylene glycol, n-propanol, glycerol, acetone, isobutanol, 1,4-butanediol, methyl ethyl ketone, isoamyl alcohol, ethyl acetate, propyl acetate, butyl acetate, ethylene glycol diacetate, ethylene glycol dibutyrate, limonene, *N*,*N*-dimethylformamide, *N*,*N*-dimethylacetamide, dimethyl sulfoxide, 1-allyl-3-methylimidazolium chloride, 1-ethyl-3-methylimidazolium acetate, tributylmethylammonium bis(trifluoromethylsulfonyl)imide, 1-ethyl-3-methylimidazolium dicyanamide, 1-ethyl-3-methylimidazolium sulfate, 1-ethyl-3-methylimidazolium bis(trifluoromethylsulfonyl)imide, and 1-butyl-3-methylimidazole tetrafluoroborate.

Depending on the needs of the specific embodiments, the pH of the liquid phase environment is any value of 1.5 to 8.5, such as any value of 2 to 8, e.g., 1.5, 2, 2.5, 3, 3.5, 4, 4.5, 5, 5.5, 6, 6.5, 7, 7.5, 8, or 8.5.

In a specific embodiment of the present invention, the liquid phase environment is water and ethanol; the mass ratio of water to ethanol in the liquid phase environment is 3:7, and the pH of the liquid phase environment is 6.5.

In a specific embodiment of the present invention, the liquid phase environment is water, acetone and methyl ethyl ketone; the mass ratio of water to acetone to methyl ethyl ketone in the liquid phase environment is 5:2:3, and the pH of the liquid phase environment is 4.5.

In a specific embodiment of the present invention, the liquid phase environment is 1-allyl-3-methylimidazolium chloride.

In a specific embodiment of the present invention, the liquid phase environment is water, 1,4-butanediol and butyl acetate; the mass ratio of water to 1,4-butanediol to butyl acetate in the liquid phase environment is 1:6:3, and the pH of the liquid phase environment is 2.

In a specific embodiment of the present invention, the liquid phase environment is tributylmethylammonium bis(trifluoromethylsulfonyl)imide.

In a specific embodiment of the present invention, the liquid phase environment is water, and the pH of the liquid phase environment is 6.5.

In a specific embodiment of the present invention, the liquid phase environment is ethanol.

In a specific embodiment of the present invention, the liquid phase environment is ethanol and limonene, and the mass ratio of ethanol to limonene in the liquid phase environment is 1:2.

In a specific embodiment of the present invention, the liquid phase environment is ethanol and *N,N*-dimethylformamide, and the mass ratio of ethanol to *N,N*-dimethylformamide in the liquid phase environment is 2:3.

In a specific embodiment of the present invention, the liquid phase environment is n-propanol and dimethyl sulfoxide, and the mass ratio of n-propanol to dimethyl sulfoxide in the liquid phase environment is 1:3.

In a specific embodiment of the present invention, the liquid phase environment is water, and the pH of the liquid phase environment is 8.

Preferably, the nanoparticles comprise:

A) first nanoparticles, the first nanoparticles being nano non-oxides, the first nanoparticles having a length-to-diameter ratio or a diameter-to-thickness ratio of 10:1 to 50000:1, and

B) second nanoparticles, the second nanoparticles being nano oxides.

Preferably, the length-to-diameter ratio or the diameter-to-thickness ratio of the first nanoparticles in A) may be any value of 10:1 to 50000:1, preferably 50:1 to 30000:1, e.g., 10:1, 50:1, 100:1, 150:1, 200:1, 250:1, 300:1, 350:1, 400:1, 450:1, 500:1, 550:1, 600:1, 650:1, 700:1, 750:1, 800:1, 850:1, 900:1, 950:1, 1000:1, 1100:1, 1200:1, 1300:1, 1400:1, 1500:1, 2500:1, 3000:1, 5000:1, 10000:1, 20000:1, 30000:1, 40000:1, or 50000:1.

Preferably, the length-to-diameter ratio or the diameter-to-thickness ratio of the nano oxides in B) is less than 10, and may be any value of 0.001 to 9.9, preferably 0.001 to 5, e.g., 0.001, 0.01, 0.1, 1, 2, 3, 4, 5, 6, 7, 8, 9, or 10.

Preferably, the mass ratio of the first nanoparticles to the second nanoparticles is any value of 0.2:1 to 5:1, e.g., 0.2:1, 0.5:1, 0.6:1, 0.65:1, 0.66:1, 0.67:1, 1:1, 1.5:1, 1.6:1, 1.65:1, 1.66:1, 1.67:1, 2:1, 2.2:1, 2.3:1, 2.4:1, 2.5:1, 3:1, 4:1, or 5:1.

Preferably, in the modification method, the ratio of the polyhydroxyalkanoate to the nanoparticles in parts by mass is any value of 5:1 to 50000:1, preferably 4000:1 to 4500:1, e.g., 5:1, 10:1, 35:1, 50:1, 100:1, 200:1, 250:1, 280:1, 300:1, 350:1, 400:1, 450:1, 500:1, 600:1, 700:1, 800:1, 900:1, 1000:1, 1500:1, 2000:1, 2500:1, 3000:1, 3500:1, 4000:1, 4165:1, 4166:1, 4167:1, 4500:1, 5000:1, 10000:1, 15000:1, 20000:1, 25000:1, 30000:1, 35000:1, 40000:1, 45000:1, or 50000:1.

Preferably, the first nanoparticles include, but are not limited to, one or a combination of two or more of nanocrystalline cellulose, carbon nanotubes, silicon nanowires, or graphene.

Preferably, the second nanoparticles include, but are not limited to, one or a combination of two or more of fumed nano-silica, nano-magnesia, nano-zinc oxide, nano-alumina, nano-iron oxide, nano-zirconia, or nano-titania.

Preferably, the nanoparticles further comprise: C) third nanoparticles.

Further preferably, the third nanoparticles include, but are not limited to, one or a combination of two or more of nano-titanium boride, nano-boron nitride, nano-titanium carbide, or nano-calcium carbonate.

In a specific embodiment of the present invention, the nanoparticles comprise first nanoparticles, second nanoparticles and third nanoparticles, wherein the first nanoparticle is nanocrystalline cellulose, the second nanoparticle is fumed nano-silica, the third nanoparticle is nano-titanium boride, and the ratio of nanocrystalline cellulose to fumed nano-silica to nano-titanium boride in parts by mass in the nanoparticles is 3:2:5.

In a specific embodiment of the present invention, the nanoparticles comprise first nanoparticles, second nanoparticles and third nanoparticles, wherein the first nanoparticle is nanocrystalline cellulose, the second nanoparticle is nano-magnesia, the third nanoparticle is nano-calcium carbonate, and the ratio of nanocrystalline cellulose to nano-magnesia to nano-calcium carbonate in parts by mass in the nanoparticles is 5:3:2.

In a specific embodiment of the present invention, the nanoparticles comprise first nanoparticles and second nanoparticles, wherein the first nanoparticle is a carbon nanotube, the second nanoparticle is fumed nano-silica and nano-zinc oxide, and the ratio of the first nanoparticles to the second nanoparticles in parts by mass in the nanoparticles is 2:3, or the ratio of fumed nano-silica to nano-zinc oxide to the carbon nanotube in parts by mass in the nanoparticles is 3:3:4.

In a specific embodiment of the present invention, the nanoparticles comprise first nanoparticles and second nanoparticles, wherein the first nanoparticle is nanocrystalline cellulose and graphene, the second nanoparticle is nano-alumina, and the ratio of the first nanoparticles to the second nanoparticles in parts by mass in the nanoparticles is 7:3, or the ratio of nanocrystalline cellulose to nano-alumina to graphene in parts by mass in the nanoparticles is 7:6:7.

In a specific embodiment of the present invention, the nanoparticles comprise first nanoparticles, second nanoparticles and third nanoparticles, wherein the first nanoparticle is graphene, the second nanoparticle is nano-zirconia, the third nanoparticle is nano-boron nitride, and the ratio of graphene to nano-zirconia to nano-boron nitride in parts by mass in the nanoparticles is 3:3:4.

In a specific embodiment of the present invention, the nanoparticles comprise first nanoparticles and second nanoparticles, wherein the first nanoparticle is a carbon nanotube, the second nanoparticle is fumed nano-silica and nano-titania, and the ratio of the first nanoparticles to the second nanoparticles in parts by mass in the nanoparticles is 2:3, or the ratio of fumed nano-silica to nano-titania to the carbon nanotube in parts by mass in the nanoparticles is 2:1:2.

In a specific embodiment of the present invention, the nanoparticles comprise first nanoparticles, second nanoparticles and third nanoparticles, wherein the first nanoparticle is nanocrystalline cellulose, the second nanoparticle is fumed nano-silica, the third nanoparticle is nano-titanium carbide, and the ratio of nanocrystalline cellulose to fumed nano-silica to nano-titanium carbide in parts by mass in the nanoparticles is 3:2:5.

In a specific embodiment of the present invention, the nanoparticles comprise first nanoparticles, second nanoparticles and third nanoparticles, wherein the first nanoparticle is nanocrystalline cellulose, the second nanoparticle is fumed nano-silica, the third nanoparticle is nano-boron nitride, and the ratio of nanocrystalline cellulose to fumed nano-silica to nano-boron nitride in parts by mass in the nanoparticles is 3:2:5.

In a specific embodiment of the present invention, the nanoparticles comprise first nanoparticles, second nanoparticles and third nanoparticles, wherein the first nanoparticle is nanocrystalline cellulose, the second nanoparticle is nano-iron oxide, the third nanoparticle is nano-titanium boride, and the ratio of nanocrystalline cellulose to nano-iron oxide to nano-titanium boride in parts by mass in the nanoparticles is 3:2:5.

In a specific embodiment of the present invention, the nanoparticles comprise first nanoparticles, second nanoparticles and third nanoparticles, wherein the first nanoparticle is a silicon nanowire, the second nanoparticle is fumed nano-silica, the third nanoparticle is nano-titanium boride, and the ratio of the silicon nanowire to fumed nano-silica to nano-titanium boride in parts by mass in the nanoparticles is 3:2:5.

Preferably, the polyhydroxyalkanoate comprises a homopolymer or a copolymer of monomers constituting the polyhydroxyalkanoate.

Further preferably, the monomers constituting the polyhydroxyalkanoate include, but are not limited to, one or a combination of two or more of 3-hydroxypropionic acid, 3-hydroxybutyric acid, 4-hydroxybutyric acid, 3-hydroxyvaleric acid, 5-hydroxyvaleric acid, 3-hydroxyhexanoic acid, 3-hydroxyoctanoic acid, 3-hydroxynonanoic acid, 3-hydroxydecanoic acid, or 3-hydroxydodecanoic acid. More preferably, the polyhydroxyalkanoate includes, but is not limited to, one or a combination of two or more of PHB, PHV, P3HP, PHO, PHN, PHBV, P34HB, P3HB4HB5HV, P3HB4HB3HV, or PHBHHx.

The molar content of 3HV in PHBV is any value of 1% to 20%, e.g., 1%, 2%, 3%, 4%, 5%, 6%, 7%, 8%, 9%, 10%, 11%, 12%, 13%, 14%, 15%, 16%, 17%, 18%, 19%, or 20%. The molar content of 3HHx in PHBHHx is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%. The molar content of 4HB in P3HB4HB is any value of 1% to 50%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, 40%, or 50%. The molar content of 4HB in P3HB4HB3HV is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%. The molar content of 3HV in P3HB4HB3HV is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%. The molar content of 4HB in P3HB4HB5HV is any value of 1% to 50%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, 40%, or 50%. The molar content of 5HV in P3HB4HB5HV is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%.

In a specific embodiment of the present invention, the polyhydroxyalkanoate comprises PHB.

In a specific embodiment of the present invention, the polyhydroxyalkanoate comprises PHBV, wherein the molar content of 3HV in PHBV is any value of 1% to 20%, e.g., 1%, 2%, 3%, 4%, 5%, 6%, 7%, 8%, 9%, 10%, 11%, 12%, 13%, 14%, 15%, 16%, 17%, 18%, 19%, or 20%. In a specific embodiment of the present invention, the molar content of 3HV in PHBV is 5%.

In a specific embodiment of the present invention, the polyhydroxyalkanoate comprises PHBHHx, wherein the molar content of 3HHx in PHBHHx is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%. In a specific embodiment of the present invention, the molar content of 3HHx in PHBHHx is 15%.

In a specific embodiment of the present invention, the polyhydroxyalkanoate comprises P3HB4HB, wherein the molar content of 4HB in P3HB4HB is any value of 1% to 50%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, 40%, or 50%. In a specific embodiment of the present invention, the molar content of 4HB in P3HB4HB is 15%.

In a specific embodiment of the present invention, the polyhydroxyalkanoate comprises P3HP.

In a specific embodiment of the present invention, the polyhydroxyalkanoate comprises P3HB4HB3HV, wherein the molar content of 4HB in P3HB4HB3HV is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%. In a specific embodiment of the present invention, the molar content of 4HB in P3HB4HB3HV is 8%, wherein the molar content of 3HV in P3HB4HB3HV is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%. In a specific embodiment of the present invention, the molar content of 3HV in P3HB4HB3HV is 7%.

In a specific embodiment of the present invention, the polyhydroxyalkanoate comprises P3HB4HB5HV, wherein the molar content of 4HB in P3HB4HB5HV is any value of 1% to 50%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, 40%, or 50%. In a specific embodiment of the present invention, the molar content of 4HB in P3HB4HB3HV is 5%; the molar content of 5HV in P3HB4HB5HV is any value of 1% to 40%, e.g., 1%, 2%, 3%, 4%, 5%, 6%, 7%, 8%, 9%, 10%, 11%, 12%, 13%, 14%, 15%, 16%, 17%, 18%, 19%, 20%, 30%, or 40%. In a specific embodiment of the present invention, the molar content of 5HV in P3HB4HB5HV is 10%.

In a specific embodiment of the present invention, the modification method comprises modifying a PHB with nanoparticles (such as nanocrystalline cellulose, fumed nano-silica, and nano-titanium boride), wherein the mass ratio of the PHB to the nanoparticles is 5000:1.

In a specific embodiment of the present invention, the modification method comprises modifying PHBV with nanoparticles (such as nanocrystalline cellulose, nano-magnesia and nano-calcium carbonate), wherein the mass ratio of the PHBV to the nanoparticles is 500:1.

In a specific embodiment of the present invention, the modification method comprises modifying PHBHHx with nanoparticles (such as fumed nano-silica, nano-zinc oxide and carbon nanotubes), wherein the mass ratio of the PHBHHx to the nanoparticles is 50000:1.

In a specific embodiment of the present invention, the modification method comprises modifying P3HB4HB with nanoparticles (such as nanocrystalline cellulose, nano-alumina and graphene), wherein the mass ratio of the P3HB4HB to the nanoparticles is 350:1.

In a specific embodiment of the present invention, the modification method comprises modifying P3HP with nanoparticles (such as graphene, nano-zirconia and nano-boron nitride), wherein the mass ratio of the P3HP to the nanoparticles is 1500:1.

In a specific embodiment of the present invention, the modification method comprises modifying P3HB4HB3HV with nanoparticles (such as fumed nano-silica, nano-titania and carbon nanotubes), wherein the mass ratio of the P3HB4HB3HV to the nanoparticles is 250:1.

In a specific embodiment of the present invention, the modification method comprises modifying P3HB4HB5HV with nanoparticles (such as nanocrystalline cellulose, fumed nano-silica and nano-titanium carbide), wherein the mass ratio of the P3 HB4 HB 5HV to the nanoparticles is 35:1.

In a specific embodiment of the present invention, the modification method comprises modifying a PHB with nanoparticles (such as nanocrystalline cellulose, fumed nano-silica, and nano-titanium carbide), wherein the mass ratio of the PHB to the nanoparticles is 280:1.

In a specific embodiment of the present invention, the modification method comprises modifying a PHB with nanoparticles (nanocrystalline cellulose, fumed nano-silica and nano-boron nitride), wherein the mass ratio of the PHB to the nanoparticles is 500:1 to 5000:1, e.g., 500:1, 1000:1, 2000:1, 3000:1, 4000:1, 4166.67:1, 4500:1, or 5000:1. In a specific embodiment of the present invention, the modification method comprises:

> 1) dispersing 0.00005 parts to 10 parts (preferably any value of 0.0001 to 1, e.g., 0.00005, 0.0001, 0.0005, 0.001, 0.005, 0.01, 0.05, 0.1, 0.5, 1, 1.5, 2, 2.5, 3, 3.5, 4, 4.5, 5, 6, 7, 8, 9, or 10 parts) of the nanoparticles into the liquid phase environment, based on 100 parts by mass of the liquid phase environment, to obtain the nanoparticle liquid phase dispersion;
> 2) dispersing 1 part to 50 parts (preferably any value of 5 to 40, e.g., 1, 5, 10, 15, 20, 25, 28, 30, 35, 40, 45, or 50 parts) of the polyhydroxyalkanoate into the nanoparticle liquid phase dispersion.

Preferably, the dispersion may be any one or a combination of two or more of dispersion methods known in the art.

Preferably, the dispersion is performed in 1 time to 10 times (preferably 1 to 3, e.g., 1, 2, 3, 4, 5, 6, 7, 8, 9, or 10 times), or the dispersion comprises 1 dispersion run to 10 dispersion runs (preferably 1 to 3, e.g., 1, 2, 3, 4, 5, 6, 7, 8, 9, or 10 dispersion runs). The dispersion may be coarse dispersion and/or fine dispersion. One dispersion run is to perform one coarse dispersion and one fine dispersion.

Preferably, the dispersion method for the coarse dispersion includes, but is not limited to, using one or a combination of two or more of a high-speed dispersion machine, a magnetic stirring dispersion method, a freeze-dried powder dispersion method, and a surface chemical modification dispersion method.

Preferably, the dispersion method for the fine dispersion includes, but is not limited to, using one or two of a homogeneous dispersion method and an ultrasonic dispersion method.

In a specific embodiment of the present invention, the method of dispersing in step 1) and step 2) comprises using a high-speed dispersion machine and/or ultrasonic dispersion.

Preferably, the dispersion time of the high-speed dispersion machine is any value of 5 min to 150 min, preferably any value of 10 min to 120 min, e.g., 5, 10, 15, 20, 25, 30, 35, 40, 45, 50, 55, 60, 65, 70, 75, 80, 85, 90, 95, 100, 105, 110, 115, 120, 125, 130, 135, 140, 145, or 150 min.

Preferably, the rotation speed of the high-speed dispersion machine is any value of 500 rpm to 22000 rpm, preferably any value of 1000 rpm to 20000 rpm, e.g., 500, 800, 1000, 1500, 2000, 2500, 3000, 3500, 4000, 4500, 5000, 5500, 6000, 6500, 7000, 7500, 8000, 8500, 9000, 9500, 10000, 11000, 12000, 13000, 14000, 15000, 16000, 17000, 18000, 19000, 20000, 21000, or 22000 rpm.

Preferably, the ultrasonic dispersion time is any value of 5 min to 150 min, preferably any value of 10 min to 120 min, e.g., 5, 10, 15, 20, 25, 30, 35, 40, 45, 50, 55, 60, 65, 70, 75, 80, 85, 90, 95, 100, 105, 110, 115, 120, 125, 130, 135, 140, 145, or 150 min.

In a specific embodiment of the present invention, the method of dispersing in step 1) and step 2) comprises using a high-speed dispersion machine and ultrasonic dispersion, and performing ultrasonic dispersion once after performing dispersion once using the high-speed dispersion machine, which is a dispersion run.

In a specific embodiment of the present invention, the modification method comprises:

i) dispersing 0.005 parts to 15 parts (preferably any value of 0.01 to 10, e.g., 0.005, 0.01, 0.015, 0.03, 0.05, 0.1, 0.5, 1, 5, 10, or 15 parts) of the nanoparticles into the liquid phase environment, based on 100 parts by mass of the liquid phase environment, to obtain the nanoparticle liquid phase dispersion;

ii) dispersing 0.5 parts to 60 parts (preferably, any value of 0.5 to 50 or 5 to 40, e.g., 1, 5, 10, 15, 20, 25, 30, 35, 40, 45, 50, 55, or 60 parts) of the polyhydroxyalkanoate into the liquid phase environment, based on 100 parts by mass of the liquid phase environment, to obtain the polyhydroxyalkanoate liquid phase dispersion;

iii) dispersing 0.5 parts to 120 parts (preferably 1 to 100, e.g., 0.5, 1, 5, 8, 10, 15, 20, 25, 30, 35, 40, 45, 50, 55, 60, 65, 70, 75, 80, 85, 90, 95, 100, 105, 110, 115, or 120 parts) of the nanoparticle liquid phase dispersion into the polyhydroxyalkanoate liquid phase dispersion, based on 100 parts by mass of the polyhydroxyalkanoate liquid phase dispersion.

Preferably, the polyhydroxyalkanoate liquid phase dispersion in ii) is prepared by separating bacteria from a polyhydroxyalkanoate fermentation broth, performing wall-breaking processing and solid-liquid separation to obtain precipitates, and dispersing the obtained precipitates into a liquid phase environment.

Preferably, the dispersion may be any one or a combination of two or more of dispersion methods known in the art.

Preferably, the dispersion is performed in 1 time to 10 times (preferably 1-3, e.g., 1, 2, 3, 4, 5, 6, 7, 8, 9, or 10 times), or the dispersion comprises 1 dispersion run to10 dispersion runs (preferably 1 to 3, e.g., 1, 2, 3, 4, 5, 6, 7, 8, 9, or 10 dispersion runs). The dispersion may be coarse dispersion and/or fine dispersion. One dispersion run is to perform one coarse dispersion and one fine dispersion.

Preferably, the dispersion method for the coarse dispersion includes, but is not limited to, using one or a combination of two or more of a high-speed dispersion machine, a magnetic stirring dispersion method, a freeze-dried powder dispersion method, or a surface chemical modification dispersion method.

Preferably, the dispersion method for the fine dispersion includes, but is not limited to, using one or two of a homogeneous dispersion method and an ultrasonic dispersion method.

In a specific embodiment of the present invention, the method of dispersing in step i), step ii) and step iii) comprises using a high-speed dispersion machine and/or ultrasonic dispersion.

Preferably, the dispersion time of the high-speed dispersion machine is any value of 5 min to 150 min, preferably any value of 10 min to 120 min, e.g., 5, 10, 15, 20, 25, 30, 35, 40, 45, 50, 55, 60, 65, 70, 75, 80, 85, 90, 95, 100, 105, 110, 115, 120, 125, 130, 135, 140, 145, or 150 min.

Preferably, the rotation speed of the high-speed dispersion machine is any value of 500 rpm to 22000 rpm, preferably any value of 1000 rpm to 20000 rpm, e.g., 500, 800, 1000, 1500, 2000, 2500, 3000, 3500, 4000, 4500, 5000, 5500, 6000, 6500, 7000, 7500, 8000, 8500, 9000, 9500, 10000, 11000, 12000, 13000, 14000, 15000, 16000, 17000, 18000, 19000, 20000, 21000, or 22000 rpm.

Preferably, the ultrasonic dispersion time is any value of 5 min to 150 min, preferably any value of 10min to 120 min, e.g., 5, 10, 15, 20, 25, 30, 35, 40, 45, 50, 55, 60, 65, 70, 75, 80, 85, 90, 95, 100, 105, 110, 115, 120, 125, 130, 135, 140, 145, or 150 min. In a specific embodiment of the present invention, the method of dispersing in step i), step ii) and step iii) comprises using a high-speed dispersion machine and ultrasonic dispersion, and performing ultrasonic dispersion once after performing dispersion once using the high-speed dispersion machine, which is a dispersion run.

Preferably, the process of dispersing the nanoparticles into the liquid phase environment or dispersing the polyhydroxyalkanoate into the liquid phase environment or dispersing the polyhydroxyalkanoate into the nanoparticle liquid phase dispersion or dispersing the nanoparticle liquid phase dispersion into the polyhydroxyalkanoate liquid phase dispersion further comprises adding an auxiliary agent.

Preferably, the auxiliary agent comprises a dispersant.

Preferably, the dispersant is added in parts by mass of 0.1 to 1, preferably any value of 0.2 to 0.5, e.g., 0.1, 0.15, 0.2, 0.22, 0.25, 0.3, 0.32, 0.33, 0.35, 0.36, 0.4, 0.44, 0.45, or 0.5, based on 100 parts by mass of the liquid phase environment.

Preferably, the dispersant includes, but is not limited to, an organic acid or an organic acid salt.

Further preferably, the organic acid or the organic acid salt includes, but is not limited to, one or a combination of two or more of acetic acid, acetate, propionic acid, propionate, stearic acid, citric acid, oleic acid, ricinoleic acid, stearate, citrate, oleate, or ricinoleate.

Preferably, the dispersant further comprises one or a combination of two or more of polyethylene glycol, polypropylene glycol, dodecanethiol, sodium 2-ethylhexyl sulfosuccinate, methyl methacrylate, methylnaphthalene, or polyisobutylene succinimide.

Further preferably, the stearate includes, but is not limited to, one or a combination of two or more of calcium stearate, zinc stearate, or magnesium stearate.

In a specific embodiment of the present invention, the dispersant is stearic acid, magnesium stearate, polyethylene glycol, and methyl methacrylate, wherein the ratio of the stearic acid to the magnesium stearate to the polyethylene glycol to the methyl methacrylate is 4:2:3:2 in parts by mass.

In a specific embodiment of the present invention, the dispersant is citric acid, sodium citrate, and dodecyl mercaptan, wherein the ratio of the citric acid to the sodium citrate to the dodecyl mercaptan is 3:2:5 in parts by mass.

In a specific embodiment of the present invention, the dispersant is oleic acid, sodium oleate, and sodium 2-ethylhexyl sulfosuccinate, wherein the ratio of the oleic acid to the sodium oleate to the sodium 2-ethylhexyl sulfosuccinate is 3:1:4 in parts by mass. In a specific embodiment of the present invention, the dispersant is ricinoleic acid, zinc ricinoleate, polypropylene glycol, and methylnaphthalene, wherein the ratio of the ricinoleic acid to the zinc ricinoleate to the polypropylene glycol to the methylnaphthalene is 1:1:2:1 in parts by mass.

In a specific embodiment of the present invention, the dispersant is oleic acid, sodium oleate, sodium 2-ethylhexyl sulfosuccinate, and polyisobutylene succinimide, wherein the ratio of the oleic acid to the sodium oleate to the sodium 2-ethylhexyl sulfosuccinate to the polyisobutylene succinimide is 2:1:2:1 in parts by mass.

In a specific embodiment of the present invention, the dispersant is stearic acid, magnesium stearate, polyethylene glycol, and methyl methacrylate, wherein the ratio of the stearic acid to the magnesium stearate to the polyethylene glycol to the methyl methacrylate is 4:2:2:3 in parts by mass.

In a specific embodiment of the present invention, the dispersant is citric acid, sodium citrate, polypropylene glycol, and methyl methacrylate, wherein the ratio of the citric acid to the sodium citrate to the polypropylene glycol to the methyl methacrylate is 4:2:2:3 in parts by mass.

In a specific embodiment of the present invention, the dispersant is oleic acid, sodium oleate, polypropylene glycol, and methyl methacrylate, wherein the ratio of the oleic acid to the sodium oleate to the polypropylene glycol to the methyl methacrylate is 4:2:2:3 in parts by mass.

In a specific embodiment of the present invention, the dispersant is ricinoleic acid, zinc ricinoleate, polyethylene glycol, and methyl methacrylate, wherein the ratio of the ricinoleic acid to the zinc ricinoleate to the polyethylene glycol to the methyl methacrylate is 4:2:3:2 in parts by mass.

Preferably, the auxiliary agent further includes one or a combination of two or more of a nucleating agent, a heat stabilizer, a chain extender, an antioxidant, a hydrolysis-resistant agent, an anti-blocking agent, a compatibilizer, a reinforcing agent, a crosslinking agent, a coupling agent, or a plasticizer.

Preferably, the nucleating agent, the heat stabilizer, the chain extender, the antioxidant, the hydrolysis-resistant agent, the anti-blocking agent, the compatibilizer, the reinforcing agent, the crosslinking agent, the coupling agent and/or the plasticizer may be of any type known in the art.

Preferably, the nucleating agent is added in parts by mass of 0.0001 to 0.5, preferably any value of 0.0001 to 0.05, e.g., 0.0001, 0.0005, 0.001, 0.005, 0.01, 0.02, or 0.05, based on 100 parts by mass of the liquid phase environment.

Preferably, the chain extender is added in parts by mass of 0.01 to 0.5, preferably any value of 0.05 to 0.3, e.g., 0.01, 0.02, 0.03, 0.04, 0.05, 0.1, 0.15, 0.2, 0.25, 0.3, 0.35, 0.4, 0.45, or 0.5, based on 100 parts by mass of the liquid phase environment. Preferably, the heat stabilizer is added in parts by mass of 0.01 to 0.5, preferably any value of 0.05 to 0.3, e.g., 0.01, 0.05, 0.1, 0.15, 0.2, 0.25, 0.3, 0.35, 0.4, 0.45, or 0.5, based on 100 parts by mass of the liquid phase environment.

Preferably, the reinforcing agent is added in parts by mass of 0.05 to 0.5, preferably any value of 0.1 to 0.3, e.g., 0.05, 0.1, 0.15, 0.2, 0.25, 0.3, 0.35, 0.4, 0.45, or 0.5, based on 100 parts by mass of the liquid phase environment.

Preferably, the antioxidant is added in parts by mass of 0.05 to 0.5, preferably any value of 0.1 to 0.3, e.g., 0.05, 0.1, 0.12, 0.15, 0.2, 0.25, 0.3, 0.35, 0.4, 0.45, or 0.5, based on 100 parts by mass of the liquid phase environment.

Preferably, the hydrolysis-resistant agent is added in parts by mass of 0.05 to 0.5, preferably any value of 0.1 to 0.3, e.g., 0.05, 0.1, 0.15, 0.2, 0.25, 0.3, 0.35, 0.4, 0.45, or 0.5, based on 100 parts by mass of the liquid phase environment.

Preferably, the anti-blocking agent is added in parts by mass of 0.05 to 0.5, preferably any value of 0.1 to 0.3, e.g., 0.05, 0.1, 0.15, 0.2, 0.25, 0.3, 0.35, 0.4, 0.45, or 0.5, based on 100 parts by mass of the liquid phase environment.

Preferably, the compatibilizer is added in parts by mass of 0.05 to 0.5, preferably any value of 0.1 to 0.3, e.g.,

0.05, 0.1, 0.15, 0.2, 0.25, 0.3, 0.35, 0.4, 0.45, or 0.5, based on 100 parts by mass of the liquid phase environment.

Preferably, the crosslinking agent is added in parts by mass of 0.005 to 0.5, preferably any value of 0.01 to 0.3, e.g., 0.005, 0.01, 0.015, 0.03, 0.05, 0.15, 0.2, 0.25, 0.3, 0.35, 0.4, 0.45, or 0.5, based on 100 parts by mass of the liquid phase environment. Preferably, the coupling agent is added in parts by mass of 0.005 to 0.5, preferably any value of 0.01 to 0.3, e.g., 0.005, 0.01, 0.015, 0.03, 0.05, 0.15, 0.2, 0.25, 0.3, 0.35, 0.4, 0.45, or 0.5, based on 100 parts by mass of the liquid phase environment.

Preferably, the plasticizer is added in parts by mass of 0.05 to 0.5, preferably any value of 0.1 to 0.3, e.g., 0.05, 0.1, 0.15, 0.2, 0.25, 0.3, 0.35, 0.4, 0.45, or 0.5, based on 100 parts by mass of the liquid phase environment.

Preferably, the modification method further comprises solid-liquid separation and/or drying.

Preferably, the step of solid-liquid separation and/or drying is performed after the polyhydroxyalkanoate is dispersed into the nanoparticle liquid phase dispersion or the nanoparticle liquid phase dispersion is dispersed into the polyhydroxyalkanoate liquid phase dispersion.

Preferably, the solid-liquid separation method includes, but is not limited to, one or a combination of two or more of disc centrifuge separation, flocculation separation, plate-and-frame filtration separation, horizontal spiral centrifuge separation, tubular centrifuge separation, or cup centrifuge separation.

Preferably, the drying method includes, but is not limited to, one or a combination of two or more of freeze drying, spray drying, reduced pressure drying, boiling drying, fluidized bed drying, or drum drying.

Processing may follow the modification as required in the specific embodiments. Methods of such processing include, but are not limited to, cold pressure granulation, spray granulation, pan granulation, boiling granulation, fluidized bed granulation, or drum granulation, and the like.

Preferably, the modification method is carried out at a temperature of any value of 0°C to -40 °C, preferably any value of 20 °C to 30 °C, e.g., 0 °C, 10 °C, 11 °C, 12 °C, 13 °C, 14 °C, 15 °C, 16 °C, 17 °C, 18 °C, 19 °C, 20 °C, 21 °C, 22 °C, 23 °C, 24 °C, 25 °C, 26 °C, 27 °C, 28 °C, 29 °C, 30 °C, 31 °C, 32 °C, 33 °C, 34 °C, 35 °C, 36°C, 37 °C, 38 °C, 39 °C, or 40 °C.

The present invention further provides a modified polyhydroxyalkanoate obtained by the modification method described above.

The present invention further provides use of the polyhydroxyalkanoate obtained by the modification method described above in the preparation of a biodegradable material.

The term "comprises", "comprising" or "includes" described herein is an open-ended description that includes the specified ingredients or steps as described, as well as other specified ingredients or steps that do not substantially affect the technical effect. The term "and/or" described herein encompasses all combinations of the items connected by the term, and each combination should be deemed to have been individually listed herein. For example, "A and/or B" encompasses "A", "A and B", and "B". Also for example, "A, B and/or C" encompasses "A", "B", "C", "A and B", "A and C", "B and C", and "A and B and C".

The "xx salts" described herein may be of any type commonly used in the prior art, such as potassium salts, calcium salts, sodium salts, magnesium salts, zinc salts, iron salts, and the like.

The "dispersion run" described herein is to use one or two or more of same or different dispersion methods to carry out dispersion operations, where one dispersion run means that the used dispersion methods are all completed once.

Beneficial Effects:

1. The modification method for a polyhydroxyalkanoate (PHA) creatively combines two processes of extraction and modification, such that the PHA obtained by microbial fermentation can achieve the effect of being directly applied to the downstream through a continuous integrated process.

The process does not need high-temperature melting, and can achieve extraction and modification at normal temperature, thereby not only saving energy and reducing emission, but also reducing the micro-damage to the PHA material itself and the loss of the molecular weight of the PHA material, and thus reducing the adverse effects on the final performance of the PHA. As the subsequent process does not need modification, the process steps are simple, and the quality of the finished product is stable.

2. The modification method for a polyhydroxyalkanoate (PHA) adopts the steps of firstly dispersing the nanoparticles, subsequently adding a PHA or a PHA-containing liquid phase environment to perform blending modification, or respectively dispersing the nanoparticles and the PHA into the liquid phase environment, and subsequently dispersing the nanoparticle liquid phase dispersion into the PHA liquid phase dispersion to perform blending modification. Experiments prove that the dispersion sequence can more significantly improve the comprehensive performance of the PHA. Upon analysis, this is probably due to the fact that the nanoparticles are more easily dispersed into particles of several to several hundred nanometers and even monodispersed nanoparticles into a liquid phase environment alone. However, if the nanoparticles are dispersed into the PHA liquid phase dispersion, or the nanoparticles and the PHA are both dispersed into the liquid phase environment at the same time, the nanoparticles are more easily adsorbed onto the PHA particles, particularly onto the PHA particles which are swelled; the nanoparticles are also prone to spontaneous agglomeration, which is not easily disentangled because most of the space in the environmental system is occupied by PHA particles; the viscosity is high, and the process of breaking up and denudation of the nanoparticle agglomerates is severely affected.

For the PHA material obtained in this way, the nanoparticles are mostly dispersed therein in the form of micron-sized agglomerates with a low density and a loose structure, and thus, a "reinforced concrete" structure having nanoparticles with a large length-to-diameter ratio as a skeleton is not formed, and a dense void filling in the nano-size is not formed, but rather, a defect in the composite material is formed, and thus, the nanoparticles cannot exhibit their specific properties, and finally, the comprehensive performance of the PHA is not improved.

On the contrary, if the nanoparticles are dispersed first, the dispersion effect of the nanoparticles into the liquid phase environment is uniform and stable, and with a low addition amount and electrostatic-steric hindrance stabilization of the dispersant, the resulting nanoparticle liquid phase dispersion has low viscosity, and the PHA added into the dispersion is easy to wet and disperse uniformly, and does not affect the nanoparticles which are already stably dispersed; while the PHA liquid phase dispersion and the nanoparticle liquid phase dispersion are stably dispersed into a liquid phase environment respectively based on the same blending method, and the dispersants in the two dispersions both have electrostatic stabilization (double electric layers are formed on the surfaces of particles, and the attractive force between similar particles is greatly reduced due to the repulsive force between the double electric layers) and steric hindrance effect (uncharged high molecular compounds are adsorbed around the particles to form a micelle state, such that repulsive force is formed between the particles). When the dispersions of the two are blended, a system of stable dispersion is formed macroscopically while keeping the repulsive force between particles.

3. In the modification method for a polyhydroxyalkanoate (PHA), the number of dispersion runs is not as many as possible. Experiments prove that the number of dispersion runs is preferably 1 dispersion run to 3 dispersion runs according to different liquid phase environments, and more runs cannot improve the dispersion and modification effect of the nanoparticles or other auxiliary agents in the PHA, but may cause the loss of the PHA material, consume more liquid phase environment solvents, affect the recovery rate of the PHA and increase the cost.

4. The modification method for a polyhydroxyalkanoate (PHA) does not adopt any halogenated hydrocarbon or aromatic hydrocarbon solvent, has low toxicity in the liquid phase environment and less environmental pollution, and does not cause waste due to excessive PHA dissolved during centrifugation because the PHA is mainly dispersed but not dissolved. The time for different dispersion runs is set according to the solubility of the PHA in different liquid phase environments, so the purity of the PHA material is ensured (the time for dispersion runs is long enough to dissolve and take away impurities in the liquid phase environment), and the recovery rate is higher (the time for dispersion runs is not too long to retain more PHA). The liquid phase environment solvent may also be fractionated and recovered, thereby reducing the cost and achieving green production.

5. The modification method for a polyhydroxyalkanoate (PHA) achieves the purposes of no need for high temperature (high energy consumption and damage to materials), no need for crushing and grinding of materials or auxiliary agents (strong mechanical action, large energy consumption and tedious steps), no need for ultraviolet curing, no need for high-energy surface modification (high cost and low efficiency) and the like in the dispersion and modification processes, and has industrial values, a low cost, a high efficiency and low energy consumption, and thus can be applied in large scale.

6. In the modification method for a polyhydroxyalkanoate (PHA), the dispersant adopts substances with soft properties such as organic acid, organic acid salt and the like, and the pH is adjusted to a proper range in an aqueous liquid phase environment, which is beneficial to retention of the double electric layers on the surfaces of particles, forming the repulsive force between the nanoparticles, thereby ensuring the dispersion stability. PHAs are a class of special materials that are oleophilic and hydrophobic but can be dispersed in water, and nanoparticles are a class of high-surface-energy substances, so the polarity of the PHA surfaces is necessarily enhanced to achieve the uniform dispersion of the PHA surfaces, and otherwise, the non-polarity of the nanoparticle surfaces is enhanced. Experiments prove that the mixture of organic acid, organic acid salt and the like and the process of adjusting the pH are beneficial to improving the compatibility between the PHA and the nanoparticles, thereby promoting and maintaining the improvement and the stability of the processing performance and the mechanical performance of the PHA, simultaneously ensuring the high recovery rate of the PHA, avoiding the damage to PHA materials due to the use of strong acid and strong alkali and in the environment with an extreme pH value, also improving the safety of process operation, and achieving the green, high-efficiency and safe whole course of the extraction and modification processes.

7. The agglomeration of the nanoparticles may be divided into the following two: soft agglomeration and hard agglomeration. Soft agglomeration is mainly caused by electrostatic forces and van der Waals forces between particles, and may be eliminated by some chemical action or by applying mechanical energy due to weak forces; hard agglomeration is mainly caused by chemical bonding action in addition to electrostatic forces and van der Waals forces, and thus the hard agglomerates are not easily broken.

The modification method for a polyhydroxyalkanoate (PHA) combines a physical method (high-speed dispersion, magnetic stirring dispersion, homogeneous dispersion or ultrasonic dispersion) and a chemical method (modification such as adsorption, grafting, coating or film forming are respectively performed on the surfaces of nanoparticles and PHA particles by using a dispersant, so as to change the surface charge distribution or polarity, wettability and compatibility with high molecules) in a liquid phase environment to significantly reduce soft and hard agglomerates. English abbreviations and Chinese full names in the present application are shown in Table 1.

Table 1. Comparison table of abbreviations and full names

| Abbreviations | Full names |
|---|---|
| PHA | Polyhydroxyalkanoate |
| PHB | Poly-3 -hydroxybutyrate |
| PHV | Poly-3 -hydroxyvalerate |
| P3HP | Poly-3-hydroxypropionate |
| PHO | Poly-3 -hydroxyoctanoate |
| PHN | Poly-3 -hydroxynonanoate |
| PHBV | Copolymer of 3-hydroxybutyric acid and 3-hydroxyvaleric acid |
| 3HV | 3-hydroxyvaleric acid |
| PHBHHx | Copolymer of 3-hydroxybutyric acid and 3-hydroxyhexanoic acid |
| 3HHx | 3-hydroxyhexanoic acid |
| P3HB4HB or P34HB | Copolymer of 3-hydroxybutyric acid and 4-hydroxybutyric acid |
| 4HB | 4-hydroxybutyric acid |
| P3HB4HB3HV | Copolymer of 3-hydroxybutyric acid, 4-hydroxybutyric acid and 3-hydroxyvaleric acid |
| P3HB4HB5HV | Copolymer of 3-hydroxybutyric acid, 4-hydroxybutyric acid and 5-hydroxyvaleric acid |
| 5HV | 5-hydroxyvaleric acid |

DETAILED DESCRIPTION

The endpoints of the ranges and any values disclosed herein are not limited to the precise ranges or values, and these ranges or values should be understood to encompass values close to these ranges or values. For numerical ranges, the endpoint values of each range, the endpoint values of each range and single point values, as well as single values, can be combined with each other to obtain one or more new numerical ranges, which should be construed as being specifically disclosed herein. In the embodiments of the present invention, the dispersion in each PHA extraction process is prepared by separating bacteria from each PHA fermentation broth, resuspending the bacteria in water to obtain a cell suspension, adding a surfactant, and subsequently performing wall-breaking processing and lysis treatment to obtain a lysate; performing solid-liquid separation on the lysate to obtain a precipitate 1; resuspending the precipitate 1 in water to obtain a lysated suspension, adding an enzyme into the lysated suspension for enzymolysis, and performing solid-liquid separation to obtain a precipitate 2; and resuspending the precipitate 2 to obtain an enzymolyzed suspension, adding a bleaching disinfectant, subsequently performing solid-liquid separation to obtain a precipitate 3, and dispersing the precipitate 3 into a liquid phase environment.

The source of the materials used in the present invention:
Unless otherwise specified, all materials used in the embodiments of the present invention are commercially available.

Nanocrystalline cellulose: available from Ningbo Tangju New Material Co., Ltd., MZ-C03C100-110, with a diameter of 80 nm to 100 nm, a length of 20 $\mu$m, and a length-to-diameter ratio of 200:1 to 250:1;
Silicon nanowire: available from Beijing Deke Daojin Science And Technology Co., Ltd., DK-SiNW-001, with a diameter of 100 nm to 200 nm, a length of >10 $\mu$m, and a length-to-diameter ratio of 50 or above;
Fumed nano-silica: available from Hubei Huifu Nanomaterial Co., Ltd., HB-139, with a particle size of 50 nm to 300 nm;
Nano-titanium boride: Brofos Nanotechnology (Ningbo) Co., Ltd., Brofos-TiB2-50, with a particle size of 50 nm;

Nano-magnesia: available from Beijing Deke Daojin Science And Technology Co., Ltd., DK-MgO-001, 30 nm to 50 nm;

Nano-calcium carbonate: available from Beijing Deke Daojin Science And Technology Co., Ltd., with a particle size of 20 nm;

Nano-zinc oxide: available from Beijing Deke Daojin Science And Technology Co., Ltd., DK-ZnO-15, with a particle size of 15 nm;

Carbon nanotube: available from Beijing Deke Daojin Science And Technology Co., Ltd., CNT200, with a tube diameter of 1 nm to 2 nm, a length of 5 $\mu$m to 30 $\mu$m, and a length-to-diameter ratio of 2500: 1 to 30000:1;

Nano-alumina: available from Beijing Deke Daojin Science And Technology Co., Ltd., DK410-2, with a particle size of 20 nm;

Graphene: available from Beijing Deke Daojin Science And Technology Co., Ltd., with a thickness of 4 nm to 20 nm, a nanoplatelet size of 5$\mu$m to 10 $\mu$m, and a diameter-to-thickness ratio of 250:1 to 2500: 1;

Nano-zirconia: available from Beijing Deke Daojin Science And Technology Co., Ltd., DK-ZrO2-001, with a particle size of 20 nm to 30 nm;

Nano-boron nitride: available from Beijing Deke Daojin Science And Technology Co., Ltd., DK-BN-001, with a particle size of 50 nm;

Nano-titania: available from Beijing Deke Daojin Science And Technology Co., Ltd., JL-TiO2-TA15, with a particle size of 5nm to 30 nm;

Nano-titanium carbide: available from Beijing Deke Daojin Science And Technology Co., Ltd., DK-TiC-001, with a particle size of 50 nm.

The test standards and methods are as follows:

I. Recovery rate:

$$\text{Recovery rate} = C2W2/C1W1 \times 100\%$$

C1: the dry matter mass of cells before extraction;
W1: the PHA purity in cell dry matter before extraction;
C2: the dry matter quality of the product after extraction;
W2: the PHA purity in product dry matter after extraction.

II. Purity:

The detection method is as follows:

1.1. Weighing: 5 standard samples were weighed and taken as standard curves, where the mass interval between every two standard samples was about 2 mg; 3 samples were weighed (sampling weights are similar for parallel experiments).

1.2. Types of standard products:

1) PHB (weighing range: 18 mg to 28 mg);
2) $\gamma$-butyrolactone (weighing range: 2 $\mu$L to 10 $\mu$L);
3) HHx methyl ester (methyl 3-hydroxyhexanoate, weighing range: 10 mg to 30 mg);
4) PHBV (weighing range: 12 mg to 30 mg);
5) P3HP (weighing range: 10 mg to 30 mg);
6) P3HB4HB3HV (weighing range: 10 mg to 30 mg);
7) P3HB4HB5HV (weighing range: 10 mg to 30 mg).

1.3. Types of samples:

1) PHB (tested using PHB standard);
2) P34HB (tested using PHB and $\gamma$-butyrolactone standards);
3) PHBHHx (tested using PHB and methyl 3-hydroxyhexanoate standards);
4) PHBV (tested using PHBV standard);

5) P3HP (tested using P3HP standard);
6) P3HB4HB3HV (tested using P3HB4HB3HV standard);
7) P3HB4HB5HV (tested using P3HB4HB5HV standard).

2. Preparation of an esterification solution: 500 mL of anhydrous methanol (chromatographically pure) was taken and placed in a large beaker, 15 mL of concentrated sulfuric acid was slowly added, 0.5 g of benzoic acid was added as a standard substance, and the mixture was transferred into a brown bottle and uniformly mixed and placed overnight. (Note: the preparation of the esterification solution was carried out in a fume hood, and the esterification solution was prepared 24 h in advance and was shaken up before use)

3. Preparation of a sample: 30 mg to 40 mg of freeze-dried bacteria powders were weighed and placed in an esterification tube. About 10 mg to 20 mg of a PHA standard sample was weighed in an esterification tube as a reference, 2 mL of trichloromethane and 2 mL of the esterification solution prepared in step 1.1 were added separately (note: the pipette tip was rinsed before use), and the tube was covered and sealed, subsequently placed in an esterification instrument, and reacted at 100 °C for 4 h. After the reaction was completed, the esterification system was cooled to room temperature, subsequently 1 mL of deionized water was added, and the mixture was fully oscillated using a vortex oscillator (at a rotation speed of 1800 rpm for 2 min), and left to stand for layer separation for about 1 h. The lower layer of an organic phase was taken using a syringe and subjected to gas chromatography.

4. Analysis of the sample: the PHA content was measured using a GC-2014 gas chromatograph available from Shimadzu corporation. The instrument was configured as follows: an HP-5 type chromatographic capillary column, a flame ionization detector (FID), and an SPL split-flow sample inlet; the carrier gas was high-purity nitrogen, the fuel gas was hydrogen, and the combustion-supporting gas was air; and sampling was performed using an AOC-20S autosampler, washing was performed for 3 times before sampling each time by using acetone as a washing solution, and subsequently rinsing was performed by using samples to be tested. The GC analysis procedure was as follows: the temperature of the detector was 250 °C, the temperature of the sample inlet was 240 °C, the initial temperature of the chromatographic column was 80 °C, the retention time was 1.5 min, and the total duration for the program was 8 min. After the sample test was completed, calculation was carried out by an internal standard normalization method.

5. Detection using gas chromatograph:

    1) Sample preparation: the esterification solution was shaken with water, and left to stand for layer separation (> 1 h), and 1 mL of the lower layer of a solution was sucked out with 1 mL syringe and injected into a sample vial.

    2) Bottle placement: sample vials were placed in special seats in sequence from left to right (the seats were provided with numbers). Chloroform (used for baseline and blank control runs) was typically placed in No. 1 seat, with the remaining samples placed sequentially.

    3) Sample injection preparation: before sample runs, whether the amounts of acetone and chloroform in the cleaning bottle were enough was checked.

    4) Sample injection: chloroform was typically taken as the first sample; elution was performed for three times to establish the baseline; samples to be tested were taken as the second sample and so on, and the standard product was taken as the last sample. To reduce errors, at least three replicates were prepared for each sample.

    5) Data processing: the retention time and corresponding peak areas from the data obtained for each GC were mainly considered, and the data were analyzed based on samples, an internal standard product (benzoic acid in the esterification solution), and standard products.

III. Tensile strength (MPa) and strain at break (%): GB/T 1040.2-2006.

Example 1

(1) Based on 100 parts by mass of a liquid phase environment (water:ethanol = 3:7, the pH value was 6.5), 0.015 parts of nanocrystalline cellulose, 0.01 parts of fumed nano-silica and 0.025 parts of nano-titanium boride were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Based on 100 parts by mass of a liquid phase environment, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts as detected, and the pH value was 6.5) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;

(3) Based on 100 parts by mass of a PHB liquid phase dispersion, 10 parts of nanoparticle liquid phase dispersion was added thereto, and the mixture was dispersed for 80 min by adopting a high-speed dispersion machine at a rotation speed of 20000 rpm, followed by ultrasonic dispersion for 80 min, which served as one dispersion run; and two dispersion runs were performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength, and the strain at break are shown in Table 2.

Example 2

(1) Based on 100 parts by mass of a liquid phase environment (water: acetone: methyl ethyl ketone = 5:2:3, the pH value was 4.5), 2.5 parts of nanocrystalline cellulose, 1.5 parts of nano-magnesia and 1 part of nano-calcium carbonate were added into the liquid phase environment, and the mixture was dispersed for 40 min by adopting a high-speed dispersion machine at a rotation speed of 10000 rpm, followed by ultrasonic dispersion for 40 min, which served as one dispersion run; and two dispersion runs were performed to obtain a nanoparticle liquid phase dispersion;

(2) Based on 100 parts by mass of a liquid phase environment, 0.1 parts of heat stabilizer, 0.15 parts of reinforcing agent and 0.4 parts of dispersant (citric acid:sodium citrate:dodecyl mercaptan = 3:2:5) were added into a dispersion (a liquid phase environment was water:acetone:methyl ethyl ketone = 5:2:3, the PHBV content was 25 parts as detected, and the pH value was 4.5) in a PHBV (the molar content of 3HV was 5%) extraction process, and the mixture was dispersed for 20 min by adopting a high-speed dispersion machine at a rotation speed of 5000 rpm, followed by ultrasonic dispersion for 20 min, which served as one dispersion run; and two dispersion runs were performed to obtain a PHBV liquid phase dispersion;

(3) Based on 100 parts by mass of a PHBV liquid phase dispersion, 1 part of nanoparticle liquid phase dispersion was added thereto, and the mixture was dispersed for 20 min by adopting a high-speed dispersion machine at a rotation speed of 2000 rpm, followed by ultrasonic dispersion for 20 min, which served as one dispersion run; and three dispersion runs were performed to obtain a PHBV/nanoparticle liquid phase dispersion; and

(4) The PHBV/nanoparticle liquid phase dispersion obtained in step (3) was subjected to flocculation separation, and subsequently subjected to reduced pressure drying and pan granulation to obtain a PHBV material.

The recovery rate, the purity, the tensile strength, and the strain at break are shown in Table 2.

Example 3

(1) Based on 100 parts by mass of a liquid phase environment (1-allyl-3-methylimidazolium chloride), 0.00003 parts of fumed nano-silica, 0.00003 parts of nano-zinc oxide and 0.00004 parts of carbon nanotube were added into the liquid phase environment, and the mixture was dispersed for 10 min by adopting a high-speed dispersion machine at a rotation speed of 1000 rpm, followed by ultrasonic dispersion for 10 min, which served as one dispersion run; and one dispersion run was performed to obtain a nanoparticle liquid phase dispersion;

(2) Subsequently 5 parts of PHBHHx (the purity was 91.1%, the molar content of 3HHx was 15%), 0.001 parts of nucleating agent, 0.12 parts of antioxidant and 0.32 parts of dispersant (oleic acid:sodium oleate:2-ethylhexyl sodium succinate = 3:1:4) were added into the nanoparticle liquid phase dispersion, and the mixture was dispersed for 10 min by adopting a high-speed dispersion machine at a rotation speed of 1000 rpm, followed by ultrasonic dispersion for 10 min, which served as one dispersion run; and two dispersion runs were performed to obtain a PHBHHx+nanoparticle liquid phase dispersion; and

(3) The PHBHHx+nanoparticle liquid phase dispersion obtained in step (2) was subjected to horizontal spiral centrifuge separation, and subsequently subjected to fluidized bed drying and fluidized bed granulation to obtain a PHBHHx material.

The recovery rate, the purity, the tensile strength, and the strain at break are shown in Table 2.

Example 4

(1) Based on 100 parts by mass of a liquid phase environment (water: 1,4-butanediol:butyl acetate = 1:6:3, the pH value was 2), 3.5 parts of nanocrystalline cellulose, 3 parts of nano-alumina and 3.5 parts of graphene were added into the liquid phase environment, and the mixture was dispersed for 120 min by adopting a high-speed dispersion machine at a rotation speed of 20000 rpm, followed by ultrasonic dispersion for 120 min, which served as one dispersion run; and one dispersion run was performed to obtain a nanoparticle liquid phase dispersion;

(2) Based on 100 parts by mass of a liquid phase environment, 0.25 parts of heat stabilizer, 0.15 parts of hydrolysis-resistant agent and 0.4 parts of dispersant (ricinoleic acid:zinc ricinoleate:polypropylene glycol:methylnaphthalene = 1:1:2:1) were added into a dispersion (a liquid phase environment was water: 1,4-butanediol:butyl acetate = 1:6:3, the P3HB4HB content was 35 parts as detected, and the pH value was 2) in a P3HB4HB (the molar content of 4HB was 15%) extraction process, and the mixture was dispersed for 120 min by adopting a high-speed dispersion machine at a rotation speed of 20000 rpm, followed by ultrasonic dispersion for 120 min, which served as one dispersion run; and one dispersion run was performed to obtain a P3HB4HB liquid phase dispersion;

(3) Based on 100 parts by mass of a P3HB4HB liquid phase dispersion, 1 part of nanoparticle liquid phase dispersion was added thereto, and the mixture was dispersed for 120 min by adopting a high-speed dispersion machine at a rotation speed of 10000 rpm, followed by ultrasonic dispersion for 120 min, which served as one dispersion run; and one dispersion run was performed to obtain a P3HB4HB/nanoparticle liquid phase dispersion; and

(4) The P3HB4HB/nanoparticle liquid phase dispersion obtained in step (3) was subjected to plate-and-frame filtration separation, and subsequently subjected to boiling drying and boiling granulation to obtain a P3HB4HB material.

The recovery rate, the purity, the tensile strength, and the strain at break are shown in Table 2.

Example 5

(1) Based on 100 parts by mass of a liquid phase environment (tributylmethylammonium bis(trifluoromethylsulfonyl)imide), 0.003 parts of graphene, 0.003 parts of nano-zirconia and 0.004 parts of nano-boron nitride were added into the liquid phase environment, and the mixture was dispersed for 30 min by adopting a high-speed dispersion machine at a rotation speed of 8000 rpm, followed by ultrasonic dispersion for 30 min, which served as one dispersion run; and two dispersion runs were performed to obtain a nanoparticle liquid phase dispersion;

(2) Subsequently 15 parts of P3HP (the purity was 91.0%), 0.01 parts of nucleating agent, 0.15 parts of anti-blocking agent and 0.36 parts of dispersant (oleic acid:sodium oleate:2-ethylhexyl sodium succinate:polyisobutylene succinimide = 2:1:2:1) were added into the nanoparticle liquid phase dispersion, and the mixture was dispersed for 30 min by adopting a high-speed dispersion machine at a rotation speed of 8000 rpm, followed by ultrasonic dispersion for 30 min, which served as one dispersion run; and three dispersion runs were performed to obtain a P3HP+nanoparticle liquid phase dispersion; and

(3) The P3HP+nanoparticle liquid phase dispersion obtained in step (2) was subjected to tubular centrifuge separation, and subsequently subjected to freeze drying and cold pressure granulation to obtain a P3HP material.

The recovery rate, the purity, the tensile strength, and the strain at break are shown in Table 2.

Example 6

(1) Based on 100 parts by mass of a liquid phase environment (water, the pH value was 6.5), 0.04 parts of fumed nano-silica, 0.02 parts of nano-titania and 0.04 parts of carbon nanotube were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Subsequently 25 parts of P3HB4HB3HV (the purity was 91.3%, the molar content of 4HB was 8%, and the molar content of 3HV was 7%), 0.05 parts of heat stabilizer, 0.1 parts of compatibilizer, and 0.33 parts of dispersant (stearic acid:magnesium stearate:polyethylene glycol:methyl methacrylate = 4:2:2:3) were added into the nanoparticle liquid phase dispersion, and the mixture was dispersed for 60 min by adopting a high-speed dispersion machine at a rotation speed of 20000 rpm, followed by ultrasonic dispersion for 60 min, which served as one dispersion run; and one dispersion run was performed to obtain a P3HB4HB3HV+nanoparticle liquid phase dispersion; and

(3) The P3HB4HB3HV+nanoparticle liquid phase dispersion obtained in step (2) was subjected to cup centrifuge separation, and subsequently subjected to drum drying and drum granulation to obtain a P3HB4HB3HV material.

The recovery rate, the purity, the tensile strength, and the strain at break are shown in Table 2.

Example 7

(1) Based on 100 parts by mass of a liquid phase environment (ethanol), 0.3 parts of nanocrystalline cellulose, 0.2 parts of fumed nano-silica and 0.5 parts of nano-titanium carbide were added into the liquid phase environment, and the mixture was dispersed for 120 min by adopting a high-speed dispersion machine at a rotation speed of 20000 rpm, followed by ultrasonic dispersion for 120 min, which served as one dispersion run; and three dispersion runs were performed to obtain a nanoparticle liquid phase dispersion;

(2) Subsequently 35 parts of P3HB4HB5HV (the purity was 91.4%, the molar content of 4HB was 5%, and the molar content of 5HV was 10%), 0.02 parts of nucleating agent, 0.03 parts of crosslinking agent, 0.03 parts of coupling agent and 0.44 parts of dispersant (citric acid:sodium citrate:polypropylene glycol:methyl methacrylate = 4:2:2:3) were added into the nanoparticle liquid phase dispersion, and the mixture was dispersed for 120 min by adopting a high-speed dispersion machine at a rotation speed of 20000 rpm, followed by ultrasonic dispersion for 120 min, which served as one dispersion run; and two dispersion runs were performed to obtain a P3HB4HB5HV+nanoparticle liquid phase dispersion; and

(3) The P3HB4HB5HV+nanoparticle liquid phase dispersion obtained in step (2) was subjected to plate-and-frame filtration separation, and subsequently subjected to fluidized bed drying and fluidized bed granulation to obtain a P3HB4HB5HV material.

The recovery rate, the purity, the tensile strength, and the strain at break are shown in Table 2.

Example 8

(1) Based on 100 parts by mass of a liquid phase environment (ethanol:limonene = 1:2), 0.03 parts of nanocrystalline cellulose, 0.02 parts of fumed nano-silica and 0.05 parts of nano-titanium carbide were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Subsequently 28 parts of PHB (the purity was 91.3%), 0.05 parts of heat stabilizer, 0.2 parts of plasticizer and 0.33 parts of dispersant (oleic acid:sodium oleate:polypropylene glycol:methyl methacrylate = 4:2:2:3) were added into the nanoparticle liquid phase dispersion, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB+nanoparticle liquid phase dispersion; and

(3) The PHB+nanoparticle liquid phase dispersion obtained in step (2) was subjected to disc centrifuge separation, and subsequently subjected to spray drying and spray granulation to obtain a PHB material.

The recovery rate, the purity, the tensile strength, and the strain at break are shown in Table 2.

Example 9

(1) Based on 100 parts by mass of a liquid phase environment (ethanol:$N$,$N$-dimethylformamide = 2:3), 0.003 parts of nanocrystalline cellulose, 0.002 parts of fumed nano-silica and 0.005 parts of nano-boron nitride were added into the liquid phase environment, and the mixture was dispersed for 10 min by adopting a high-speed dispersion machine at a rotation speed of 2000 rpm, followed by ultrasonic dispersion for 10 min, which served as one dispersion run; and three dispersion runs were performed to obtain a nanoparticle liquid phase dispersion;

(2) Based on 100 parts by mass of a liquid phase environment, 0.0001 parts of nucleating agent, 0.05 parts of chain extender and 0.22 parts of dispersant (ricinoleic acid:zinc ricinoleate:polyethylene glycol:methyl methacrylate = 4:2:3:2) were added into a dispersion (a liquid phase environment was ethanol:*N,N*-dimethylformamide = 2:3, and the content of PHB was 5 parts as detected) in a PHB extraction process, and the mixture was dispersed for 10 min by adopting a high-speed dispersion machine at a rotation speed of 1000 rpm, followed by ultrasonic dispersion for 10 min, which served as one dispersion run; and three dispersion runs were performed to obtain a PHB liquid phase dispersion;

(3) Based on 100 parts by mass of a PHB liquid phase dispersion, 100 parts of nanoparticle liquid phase dispersion was added thereto, and the mixture was dispersed for 5 min by adopting a high-speed dispersion machine at a rotation speed of 500 rpm, followed by ultrasonic dispersion for 5 min, which served as one dispersion run; and three dispersion runs were performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength, and the strain at break are shown in Table 2.

Example 10

(1) Based on 100 parts by mass of a liquid phase environment (n-propanol:dimethyl sulfoxide = 1:3), 0.015 parts of nanocrystalline cellulose, 0.01 parts of fumed nano-silica and 0.025 parts of nano-boron nitride were added into the liquid phase environment, and the mixture was dispersed for 80 min by adopting a high-speed dispersion machine at a rotation speed of 12000 rpm, followed by ultrasonic dispersion for 80 min, which served as one dispersion run; and two dispersion runs were performed to obtain a nanoparticle liquid phase dispersion;

(2) Based on 100 parts by mass of a liquid phase environment, 0.001 parts of nucleating agent, 0.15 parts of chain extender and 0.33 parts of dispersant (ricinoleic acid:zinc ricinoleate:polyethylene glycol:methyl methacrylate = 4:2:3:2) were added into a dispersion (a liquid phase environment was n-propanol:dimethyl sulfoxide = 1:3, and the PHB content was 20 parts as detected) in a PHB extraction process, and the mixture was dispersed for 80 min by adopting a high-speed dispersion machine at a rotation speed of 12000 rpm, followed by ultrasonic dispersion for 80 min, which served as one dispersion run; and two dispersion runs were performed to obtain a PHB liquid phase dispersion;

(3) Based on 100 parts by mass of a PHB liquid phase dispersion, 8 parts of nanoparticle liquid phase dispersion was added thereto, and the mixture was dispersed for 80 min by adopting a high-speed dispersion machine at a rotation speed of 12000 rpm, followed by ultrasonic dispersion for 80 min, which served as one dispersion run; and one dispersion run was performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength, and the strain at break are shown in Table 2.

Example 11

(1) Based on 100 parts by mass of a liquid phase environment (water, the pH value was 8), 0.009 parts of nanocrystalline cellulose, 0.006 parts of fumed nano-silica and 0.015 parts of nano-boron nitride were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Based on 100 parts by mass of a liquid phase environment, 0.001 parts of nucleating agent, 0.15 parts of chain extender and 0.33 parts of dispersant (ricinoleic acid:zinc ricinoleate:polyethylene glycol:methyl methacrylate = 4:2:3:2) were added into a dispersion (a liquid phase environment was water, the PHB content was 25 parts as detected, and the pH value was 8) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;

(3) Based on 100 parts by mass of a PHB liquid phase dispersion, 20 parts of nanoparticle liquid phase dispersion was added thereto, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength, and the strain at break are shown in Table 2.

Example 12

(1) Based on 100 parts by mass of a liquid phase environment (water:ethanol = 3:7, the pH value was 6.5), 0.015 parts of nanocrystalline cellulose, 0.01 parts of fumed nano-silica and 0.025 parts of nano-titanium boride were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Based on 100 parts by mass of a liquid phase environment, 0.33 parts of dispersant (stearic acid:magnesium stearate:polyethylene glycol:methyl methacrylate = 4:2:3:2) was added into a dispersion (a liquid phase environment was water:ethanol = 3:7, the PHB content was 25 parts as detected, and the pH value was 6.5) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;

(3) Based on 100 parts by mass of a PHB liquid phase dispersion, 10 parts of nanoparticle liquid phase dispersion was added thereto, and the mixture was dispersed for 80 min by adopting a high-speed dispersion machine at a rotation speed of 20000 rpm, followed by ultrasonic dispersion for 80 min, which served as one dispersion run; and two dispersion runs were performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength, and the strain at break are shown in Table 2.

Example 13 (Replacement of Fumed Nano-Silica with Nano-Iron Oxide as Compared with Example 1)

Compared with Example 1, the fumed nano-silica was replaced with nano-iron oxide (the length-to-diameter ratio was less than 10), and the rest conditions were unchanged.
The recovery rate, the purity, the tensile strength, and the strain at break are shown in Table 2.

Example 14 (Replacement of Nanocrystalline Cellulose with Silicon Nanowire as Compared with Example 1)

Compared with Example 1, the nanocrystalline cellulose was replaced with silicon nanowire (the length-to-diameter ratio was larger than 50), and the rest conditions were unchanged.
The recovery rate, the purity, the tensile strength, and the strain at break are shown in Table 2.

Comparative Example 1 (Conventional Melt Blending Modification Method Adopted as Compared with Example 1)

A dispersion (a liquid phase environment was water:ethanol = 3:7, the PHB content was 25 parts as detected, and the pH value was 6.5) in a PHB extraction process was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion which was subsequently subjected to disc centrifuge separation, spray drying and spray granulation to obtain PHB nascent granules; and subsequently the PHB nascent particles were melted and blended with 0.001 parts of nucleating agent, 0.15 parts of chain extender, 0.33 parts of dispersant (stearic acid:magnesium stearate:polyethylene glycol:methyl methacrylate = 4:2:3:2), 0.0015 parts of nanocrystalline cellulose, 0.001 parts of fumed nano-silica and 0.0025 parts of nano-titanium boride, and the resulting mixture was subsequently put into a twin-screw extruder for granulation to obtain a PHB material.
Compared with Example 1, a conventional melt blending modification method was adopted, and other conditions such as the type and the dosage of the auxiliary agents were unchanged.
The recovery rate, the purity, the tensile strength and the strain at break are shown in Table 2. Although the recovery rate was slightly higher than that of Example 1, the tensile strength and the strain at break were obviously inferior.

Comparative Example 2 (Simultaneous Dispersion of Nanoparticles and PHB in Different Dispersion Orders as Compared with Example 1)

(1) Based on 100 parts by mass of a liquid phase environment, 0.0015 parts of nanocrystalline cellulose, 0.001 parts of fumed nano-silica, 0.0025 parts of nano-titanium boride, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts, and the pH value was 6.5) in a PHB extraction process, and the mixture was dispersed for 100 min by adopting a high-speed dispersion machine at a rotation speed of 20000 rpm, followed by ultrasonic dispersion for 100 min, which served as one dispersion run; and three dispersion runs were performed to obtain a PHB/nanoparticle liquid phase dispersion; and
(2) The PHB/nanoparticle liquid phase dispersion obtained in step (1) was subjected to disc centrifuge separation, and subsequently subjected to spray drying and spray granulation to obtain a PHB material.

Compared with Example 1, the nanoparticles were directly added into the dispersion in the PHB extraction process, which was equivalent to being directly dispersed with the PHB into a liquid phase environment at the same time, in different dispersion orders. As compensation, the dispersion time, the rotation speed and the number of runs were increased, but other conditions such as the type and the dosage of the auxiliary agents were unchanged.
The recovery rate, the purity, the tensile strength and the strain at break are shown in Table 2. Although the recovery rate was slightly higher than that of Example 1, the tensile strength and the strain at break were obviously inferior.

Comparative Example 3 (Direct Dispersion of Nanoparticles into the PHB Liquid Phase Dispersion in Different Dispersion Orders as Compared with Example 1)

(1) Based on 100 parts by mass of a liquid phase environment, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts, and the pH value was 6.5) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;
(2) Based on 100 parts by mass of a PHB liquid phase dispersion, 0.0015 parts of nanocrystalline cellulose, 0.001 parts of fumed nano-silica and 0.0025 parts of nano-titanium boride were added into the PHB liquid phase dispersion, and the mixture was dispersed for 100 min by adopting a high-speed dispersion machine at a rotation speed of 20000 rpm, followed by ultrasonic dispersion for 100 min, which served as one dispersion run; and two dispersion runs were performed to obtain a PHB/nanoparticle liquid phase dispersion; and
(3) The PHB/nanoparticle liquid phase dispersion obtained in step (2) was subjected to disc centrifuge separation, and subsequently subjected to spray drying and spray granulation to obtain a PHB material.

Compared with Example 1, the nanoparticles were directly dispersed into the PHB liquid phase dispersion, in different dispersion orders. As compensation, the dispersion time and the rotation speed were increased, but other conditions such as the type and the dosage of the auxiliary agents were unchanged.
The recovery rate, the purity, the tensile strength and the strain at break are shown in Table 2, where the tensile strength and the strain at break were obviously inferior to those of Example 1.

Comparative Example 4 (The Number of Dispersion Runs Increased to 5 Runs as Compared with Example 1)

Compared with Example 1, the number of dispersion runs was 5 runs, and other conditions were unchanged.
The recovery rate, the purity, the tensile strength and the strain at break are shown in Table 2. Although the purity was slightly higher than that of Example 1, the recovery rate was reduced, and the energy consumption was about 150% higher than that of Example 1.

Comparative Example 5 (The Number of Dispersion Runs Increased to 8 Runs as Compared with Example 1)

Compared with Example 1, the number of dispersion runs was 8 runs, and other conditions were unchanged.
The recovery rate, the purity, the tensile strength and the strain at break are shown in Table 2. Although the purity was slightly higher than that of Example 1, the recovery rate was reduced, and the energy consumption was about 300% higher than that of Example 1.

Comparative Example 6 (Different Types of Liquid Phase Environments as Compared with Example 8)

Compared with Example 8, the liquid phase environment was chloroform:toluene = 3:2, i.e., halogenated hydrocarbon and aromatic hydrocarbon solvent, and other conditions were unchanged.
The recovery rate, the purity, the tensile strength and the strain at break are shown in Table 2. Although the purity and the tensile strength were slightly higher than those of Example 1, the recovery rate was lower than that of Example 1, and the solvent was not environment-friendly, which could affect the health of personnel and cause a prominent potential safety hazard.
Comparative Example 7 (Too Short Dispersion Time as Compared with Example 1) Compared with Example 1, the dispersion time of the high-speed dispersion machine and the dispersion time of ultrasonic dispersion were both reduced to 3 min, and other conditions were unchanged.
The recovery rate, the purity, the tensile strength and the strain at break are shown in Table 2. Although the recovery rate was slightly higher than that of Example 1, the purity, the tensile strength and the strain at break were all reduced.

Comparative Example 8 (Too Long Dispersion Time as Compared with Example 1)

Compared with Example 1, the dispersion time of the high-speed dispersion machine and the dispersion time of ultrasonic dispersion were both increased to 180 min, and other conditions were unchanged.
The recovery rate, the purity, the tensile strength, and the strain at break are shown in Table 2. Although the purity was slightly higher than that of Example 1, the recovery rate was lower than that of Example 1, and the energy consumption was about 200% higher than that of Example 1.

Comparative Example 9 (Dispersion Blending Method of Combining Vibration Mill and Ball Mill Adopted as Compared with Example 8)

(1) 0.05 parts of heat stabilizer, 0.2 parts of plasticizer, 0.33 parts of dispersant (oleic acid:sodium oleate:polypropylene glycol:methyl methacrylate = 4:2:2:3), 0.03 parts of nanocrystalline cellulose, 0.02 parts of fumed nano-silica and 0.05 parts of nano-titanium carbide were added into 28 parts of PHB (the purity was 94.3%), and the mixture was crushed using a vibration mill, where the medium filling rate was 80%; the material-to-ball ratio was 0.7; the vibration acceleration was 12 g; and the grinding time was 3 h.
(2) Subsequently the mixture was continuously ground by adopting a ball milling process to obtain a PHB+nanoparticle liquid phase dispersion, where the solvent was 100 parts of ethanol:limonene = 1:2, the grinding medium was zirconia balls with a diameter of 1 mm, PHB grinding medium = 1: 1 (mass ratio), and the ball milling time was 4 h.
(3) The PHB+nanoparticle liquid phase dispersion obtained in step (2) was subjected to disc centrifuge separation, and subsequently subjected to spray drying and spray granulation to obtain a PHB material.

Compared with Example 8, the dispersion blending method of combining vibration mill and ball mill was adopted, where the former was a dry method, and the latter was a wet method, which was beneficial to subsequent granulation.
The recovery rate, the purity, the tensile strength and the strain at break are shown in Table 2. Although the recovery rate was slightly higher than that of Example 8, the nanoparticles were not uniformly dispersed, such that the purity, the tensile strength and the strain at break were all lower than those of Example 8, and the energy consumption was about 200% higher.

Comparative Example 10 (Replacement of Organic Acid and Organic Acid Salt with Inorganic Acid and Inorganic Acid Salt as Compared with Example 1)

Compared with Example 1, stearic acid and magnesium stearate were replaced with sulfuric acid and sodium sulfate, that is, organic acids and organic acid salts were replaced with inorganic acids and inorganic acid salts, and other conditions were unchanged.

The recovery rate, the purity, the tensile strength and the strain at break were shown in Table 2, and due to the destructive effect of the strong inorganic acid on the PHB, the tensile strength and the strain at break were lower than those of Example 1, and the use process was unsafe, which could cause a more prominent potential safety hazard. Comparative Example 11 (Too High pH Value as Compared with Example 1) Compared with Example 1, the pH value of the liquid phase environment was adjusted from 6.5 to 12, that is, the pH value was too high, and other conditions were unchanged.

The recovery rate, the purity, the tensile strength and the strain at break are shown in Table 2, and due to the destructive effect of the PHB with too strong alkalinity, the tensile strength and the strain at break were significantly reduced as compared with Example 1.

Comparative Example 12 (No Ultrasonic Dispersion Treatment as Compared with Example 1)

(1) Based on 100 parts by mass of a liquid phase environment (water:ethanol = 3:7, the pH value was 6.5), 0.015 parts of nanocrystalline cellulose, 0.01 parts of fumed nano-silica and 0.025 parts of nano-titanium boride were added into the liquid phase environment, and the mixture was dispersed for 240 min by adopting a high-speed dispersion machine at a rotation speed of 10000 rpm to obtain a nanoparticle liquid phase dispersion;

(2) Based on 100 parts by mass of a liquid phase environment, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts, and the pH value was 6.5) in a PHB extraction process, and the mixture was dispersed for 240 min by adopting a high-speed dispersion machine at a rotation speed of 10000 rpm to obtain a PHB liquid phase dispersion;

(3) Based on 100 parts by mass of a PHB liquid phase dispersion, 10 parts of nanoparticle liquid phase dispersion was added thereto, and the mixture was dispersed for 320 min by adopting a high-speed dispersion machine at a rotation speed of 20000 rpm to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

Compared with Example 1, no ultrasonic dispersion treatment was performed. As compensation, the dispersion time of the high-speed dispersion machine was prolonged by an equivalent amount, and other conditions were unchanged.

The recovery rate, the purity, the tensile strength and the strain at break are shown in Table 2, where the tensile strength and the strain at break were reduced as compared with Example 1.

Comparative Example 13 (No Dispersion Treatment Using High-Speed Dispersion Machine as Compared with Example 1)

(1) Based on 100 parts by mass of a liquid phase environment (water:ethanol = 3:7, the pH value was 6.5), 0.015 parts of nanocrystalline cellulose, 0.01 parts of fumed nano-silica and 0.025 parts of nano-titanium boride were added into the liquid phase environment, and the mixture was subjected to ultrasonic dispersion for 240 min to obtain a nanoparticle liquid phase dispersion;

(2) Based on 100 parts by mass of a liquid phase environment, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts, and the pH value was 6.5) in a PHB extraction process, and the mixture was subjected to ultrasonic dispersion for 240 min to obtain a PHB liquid phase dispersion;

(3) Based on 100 parts by mass of a PHB liquid phase dispersion, 10 parts of nanoparticle liquid phase dispersion was added thereto, and the mixture was subjected to ultrasonic dispersion for 320 min to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

Compared with Example 1, no dispersion treatment using a high-speed dispersion machine was performed. As compensation, the ultrasonic dispersion time was prolonged by an equivalent amount, and other conditions were unchanged.

The recovery rate, the purity, the tensile strength and the strain at break are shown in Table 2, where the purity, the tensile strength and the strain at break were reduced as compared with Example 1.

Comparative Example 14 (No Dispersant as Compared with Example 1)

Compared with Example 1, no dispersant was added, and other conditions were unchanged.
The recovery rate, the purity, the tensile strength and the strain at break are shown in Table 2, where the tensile strength and the strain at break were reduced as compared with Example 1.

Comparative Example 15 (Nanoparticles Having Only Second Nanoparticles (Nano Oxides) as Compared with Example 1, with the Total Amount of Nanoparticles Being Unchanged)

(1) Based on 100 parts by mass of a liquid phase environment (water:ethanol = 3:7, the pH value was 6.5), 0.05 parts of fumed nano-silica was added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Based on 100 parts by mass of a liquid phase environment, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts as detected, and the pH value was 6.5) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;

(3) Based on 100 parts by mass of a PHB liquid phase dispersion, 10 parts of nanoparticle liquid phase dispersion was added thereto, and the mixture was dispersed for 80 min by adopting a high-speed dispersion machine at a rotation speed of 20000 rpm, followed by ultrasonic dispersion for 80 min, which served as one dispersion run; and two dispersion runs were performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength and the strain at break are shown in Table 2, where the tensile strength and the strain at break were reduced as compared with Example 1.

Comparative Example 16 (Nanoparticles Having Only First Nanoparticles (Nano Non-Oxides, with Length-To-Diameter Ratio of 10: 1 to 50000: 1) as Compared with Example 1, with the Total Amount of Nanoparticles Being Unchanged)

(1) Based on 100 parts by mass of a liquid phase environment (water:ethanol = 3:7, the pH value was 6.5), 0.05 parts of nanocrystalline cellulose was added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Based on 100 parts by mass of a liquid phase environment, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts as detected, and the pH value was 6.5) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;

(3) Based on 100 parts by mass of a PHB liquid phase dispersion, 10 parts of nanoparticle liquid phase dispersion was added thereto, and the mixture was dispersed for 80 min by adopting a high-speed dispersion machine at a rotation speed of 20000 rpm, followed by ultrasonic dispersion for 80 min, which served as one dispersion run; and two dispersion runs were performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength and the strain at break are shown in Table 2, where the tensile strength and the strain at break were reduced as compared with Example 1.

Comparative Example 17 (the Length-To-Diameter Ratio of the First Nanoparticles (Nano Non-Oxides, Nano-Silver) Being Outside of 10:1 to 50000:1 as Compared with Example 1)

(1) Based on 100 parts by mass of a liquid phase environment (water:ethanol = 3:7, the pH value was 6.5), 0.015 parts of nano-silver, 0.01 parts of fumed nano-silica and 0.025 parts of nano-titanium boride were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;
(2) Based on 100 parts by mass of a liquid phase environment, 0.001 parts of nucleating agent, 0.15 parts of chain extender and 0.33 parts of dispersant (stearic acid:magnesium stearate:polyethylene glycol:methyl methacrylate = 4:2:3:2) were added into a dispersion (a liquid phase environment was water:ethanol = 3:7, the PHB content was 25 parts as detected, and the pH value was 6.5) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;
(3) Based on 100 parts by mass of a PHB liquid phase dispersion, 10 parts of nanoparticle liquid phase dispersion was added thereto, and the mixture was dispersed for 80 min by adopting a high-speed dispersion machine at a rotation speed of 20000 rpm, followed by ultrasonic dispersion for 80 min, which served as one dispersion run; and two dispersion runs were performed to obtain a PHB/nanoparticle liquid phase dispersion; and
(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength and the strain at break are shown in Table 2, where the tensile strength and the strain at break were reduced as compared with Example 1.

Comparative Example 18 (No Auxiliary Agent as Compared with Example 1)

(1) Based on 100 parts by mass of a liquid phase environment (water:ethanol = 3:7, the pH value was 6.5), 0.015 parts of nanocrystalline cellulose, 0.01 parts of fumed nano-silica and 0.025 parts of nano-titanium boride were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;
(2) Based on 100 parts by mass of a liquid phase environment, a dispersion (a liquid phase environment was water: ethanol = 3:7, the PHB content was 25 parts as detected, and the pH value was 6.5) in a PHB extraction process was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;
(3) Based on 100 parts by mass of a PHB liquid phase dispersion, 10 parts of nanoparticle liquid phase dispersion was added thereto, and the mixture was dispersed for 80 min by adopting a high-speed dispersion machine at a rotation speed of 20000 rpm, followed by ultrasonic dispersion for 80 min, which served as one dispersion run; and two dispersion runs were performed to obtain a PHB/nanoparticle liquid phase dispersion; and
(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength and the strain at break are shown in Table 2, where the tensile strength and the strain at break were reduced as compared with Example 1.

Comparative Example 19 (the Dispersant Used Being Free of Organic Acid and Organic Acid Salt as Compared with Example 1)

(1) Based on 100 parts by mass of a liquid phase environment (water:ethanol = 3:7, the pH value was 6.5), 0.015 parts of nanocrystalline cellulose, 0.01 parts of fumed nano-silica and 0.025 parts of nano-titanium boride were added into the liquid phase environment, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a nanoparticle liquid phase dispersion;

(2) Based on 100 parts by mass of a liquid phase environment, 0.001 parts of nucleating agent, 0.15 parts of chain extender and 0.33 parts of dispersant (polyethylene glycol:methyl methacrylate = 3:2) were added into a dispersion (a liquid phase environment was water:ethanol = 3:7, the PHB content was 25 parts as detected, and the pH value was 6.5) in a PHB extraction process, and the mixture was dispersed for 60 min by adopting a high-speed dispersion machine at a rotation speed of 10000 rpm, followed by ultrasonic dispersion for 60 min, which served as one dispersion run; and two dispersion runs were performed to obtain a PHB liquid phase dispersion;

(3) Based on 100 parts by mass of a PHB liquid phase dispersion, 10 parts of nanoparticle liquid phase dispersion was added thereto, and the mixture was dispersed for 80 min by adopting a high-speed dispersion machine at a rotation speed of 20000 rpm, followed by ultrasonic dispersion for 80 min, which served as one dispersion run; and two dispersion runs were performed to obtain a PHB/nanoparticle liquid phase dispersion; and

(4) The PHB/nanoparticle liquid phase dispersion obtained in step (3) was subjected to disc centrifuge separation, and subsequently subjected to spray drying and spray granulation to obtain a PHB material.

The recovery rate, the purity, the tensile strength and the strain at break are shown in Table 2, where the tensile strength and the strain at break were reduced as compared with Example 1.

The "PHA before modification" is a material obtained by synthesizing a PHA through microbial fermentation and subsequently extracting the PHA according to a conventional process in the market. The PHA materials used in Examples 3, 5, 6, 7 and 8 and Comparative Examples 6 and 9 are materials of "PHA before modification" and are listed in the table for comparison, so the liquid phase blending modification method provided by the present invention can significantly improve the extraction and performance of the PHA. In addition, it is hereby stated that, as Examples 3, 5, 6, 7 and 8 and Comparative Examples 6 and 9 do not relate to the PHA extraction process dispersion, the calculation of the recovery rate is based on the PHA content in the material of "PHA before modification" as a denominator.

Table 2. Comparison of method effects of examples and comparative examples and performance data of the obtained PHA materials and PHA before modification

| No. | Recovery rate (%) | Purity (%) | Tensile strength (MPa) | Strain at break (%) |
|---|---|---|---|---|
| Example 1 (PHB) | 93.4 | 97.0 | 48.8 | 40.4 |
| PHB before modification | 91.3 | 92.6 | 32.5 | 9.1 |
| Example 2 (PHBV) | 93.1 | 96.9 | 43.2 | 52.9 |
| PHBV before modification | 91.5 | 92.3 | 26.7 | 23.0 |
| Example 3 (PHBHHx) | 93.2 | 96.8 | 25.6 | 253.5 |
| PHBHHx before modification | 91.1 | 92.7 | 10.8 | 216.4 |
| Example 4 (P3HB4HB) | 93.3 | 96.9 | 28.0 | 247.6 |
| P3HB4HB before modification | 91.2 | 92.5 | 12.4 | 210.3 |
| Example 5 (P3HP) | 93.2 | 97.1 | 42.6 | 670.9 |
| P3HP before modification | 91.0 | 92.7 | 27.5 | 626.8 |
| Example 6 (P3HB4HB3HV) | 93.4 | 96.8 | 42.0 | 167.6 |
| P3HB4HB3HV Before modification | 91.3 | 92.5 | 27.2 | 128.7 |
| Example 7 (P3HB4HB5HV) | 93.6 | 96.7 | 40.9 | 125.1 |

(continued)

| No. | Recovery rate (%) | Purity (%) | Tensile strength (MPa) | Strain at break (%) |
|---|---|---|---|---|
| P3HB4HB5HV Before modification | 91.4 | 92.2 | 24.8 | 95.0 |
| Example 8 (PHB) | 93.1 | 97.3 | 49.5 | 38.9 |
| Example 9 (PHB) | 93.0 | 97.4 | 49.7 | 38.6 |
| Example 10 (PHB) | 93.2 | 97.1 | 49.3 | 39.5 |
| Example 11 (PHB) | 93.7 | 96.5 | 47.9 | 40.8 |
| Example 12 (PHB) | 93.4 | 97.1 | 45.2 | 46.7 |
| Example 13 (PHB) | 93.5 | 97.0 | 42.3 | 34.7 |
| Example 14 (PHB) | 93.4 | 96.9 | 44.1 | 32.8 |
| Comparative Example 1 (PHB) | 93.8 | 96.3 | 34.2 | 11.4 |
| Comparative Example 2 (PHB) | 93.6 | 96.9 | 38.1 | 16.0 |
| Comparative Example 3 (PHB) | 93.5 | 97.1 | 39.8 | 18.4 |
| Comparative Example 4 (PHB) | 92.7 | 97.3 | 49.2 | 39.6 |
| Comparative Example 5 (PHB) | 92.0 | 97.5 | 49.4 | 38.9 |
| Comparative Example 6 (PHB) | 84.2 | 98.1 | 50.3 | 39.7 |
| Comparative Example 7 (PHB) | 93.8 | 96.0 | 36.5 | 20.9 |
| Comparative Example 8 (PHB) | 93.0 | 97.2 | 49.1 | 39.8 |
| Comparative Example 9 (PHB) | 93.7 | 95.9 | 38.4 | 21.3 |
| Comparative Example 10 (PHB) | 93.1 | 97.2 | 37.5 | 23.6 |
| Comparative Example 11 (PHB) | 93.4 | 96.9 | 29.8 | 8.3 |
| Comparative Example 12 (PHB) | 93.6 | 96.7 | 35.4 | 8.5 |
| Comparative Example 13 (PHB) | 93.7 | 96.4 | 32.9 | 12.0 |
| Comparative Example 14 (PHB) | 93.5 | 96.8 | 36.3 | 7.6 |
| Comparative Example 15 (PHB) | 93.4 | 97.0 | 39.6 | 16.5 |
| Comparative Example 16 (PHB) | 93.4 | 97.0 | 37.9 | 36.4 |
| Comparative Example 17 (PHB) | 93.4 | 97.0 | 42.0 | 21.2 |
| Comparative Example 18 (PHB) | 93.5 | 97.1 | 34.5 | 11.2 |
| Comparative Example 19 (PHB) | 93.3 | 96.9 | 37.0 | 14.4 |

As can be seen from Table 2, the integration of PHA extraction and modification processes performed using the method herein resulted in the recovery rate of 93.0% or more, and the purity of 96.5% or more, and taking PHB as an example, the tensile strength of 42.3MPa or more, and the strain at break of 32.8% or more.

Although the preferred embodiments of the present invention are described in detail above, the PHA of the present invention is not limited to the above embodiments. The source of the PHA can be replaced with other ways of producing and extracting the PHA within the scope of the technical idea of the present invention, and such simple replacements all fall within the protection scope of the present invention.

In addition, it should be noted that the various specific technical features described in the above specific embodiments can be combined in any suitable manner in which the features do not contradict each other. In order to avoid unnecessary repetition, such combinations will not be illustrated separately.

**Claims**

1. A modification method for a polyhydroxyalkanoate, wherein the modification method comprises adding a modifier into a polyhydroxyalkanoate liquid phase dispersion, a preparation method for the polyhydroxyalkanoate liquid phase dispersion comprises performing wall-breaking processing on bacteria in a polyhydroxyalkanoate fermentation broth.

2. The modification method according to claim 1, wherein the modifier comprises nanoparticles and/or an auxiliary agent.

3. The modification method according to claim 1 or 2, wherein the modification method comprises:

   A) dispersing the nanoparticles into a liquid phase environment to obtain a nanoparticle liquid phase dispersion, and subsequently dispersing the nanoparticle liquid phase dispersion into the polyhydroxyalkanoate liquid phase dispersion; or
   B) directly dispersing the nanoparticles into the polyhydroxyalkanoate liquid phase dispersion.

4. A modification method for a polyhydroxyalkanoate, comprising:

   a) dispersing nanoparticles into a liquid phase environment to obtain a nanoparticle liquid phase dispersion, and subsequently dispersing the polyhydroxyalkanoate into the nanoparticle liquid phase dispersion; or
   b) dispersing nanoparticles into a liquid phase environment to obtain a nanoparticle liquid phase dispersion, dispersing the polyhydroxyalkanoate into a liquid phase environment to obtain a polyhydroxyalkanoate liquid phase dispersion, and subsequently dispersing the nanoparticle liquid phase dispersion into the polyhydroxyalkanoate liquid phase dispersion.

5. The modification method according to any one of claims 2-4, wherein the ratio of the polyhydroxyalkanoate to the nanoparticles in parts by mass is in the range of 5:1 to 50000:1.

6. The modification method according to claim 3 or 4, wherein 0.00005 parts to 15 parts of the nanoparticles are dispersed into the liquid phase environment, based on 100 parts by mass of the liquid phase environment, to obtain the nanoparticle liquid phase dispersion.

7. The modification method according to claim 4, wherein 1 part to 50 parts of the polyhydroxyalkanoate is dispersed into the nanoparticle liquid phase dispersion.

8. The modification method according to claim 4, wherein 0.5 parts to 50 parts of the polyhydroxyalkanoate is dispersed into the liquid phase environment, based on 100 parts by mass of the liquid phase environment, to obtain the polyhydroxyalkanoate liquid phase dispersion.

9. The modification method according to any one of claims 3-6, wherein 0.5 parts to 120 parts of the nanoparticle liquid phase dispersion is dispersed into the polyhydroxyalkanoate liquid phase dispersion, based on 100 parts by mass of the polyhydroxyalkanoate liquid phase dispersion.

10. The modification method according to any one of claims 2-9, wherein the nanoparticles comprise:

    A) first nanoparticles, the first nanoparticles being nano non-oxides, and the first nanoparticles having a length-to-diameter ratio or a diameter-to-thickness ratio of 10:1 to 50000:1, and

B) second nanoparticles, the second nanoparticles being nano oxides.

11. The modification method according to claim 10, wherein the mass ratio of the first nanoparticles to the second nanoparticles is in the range of 0.2:1 to 5:1.

12. The modification method according to claim 10 or 11, wherein the first nanoparticles comprise one or a combination of two or more of nanocrystalline cellulose, carbon nanotubes, silicon nanowires, or graphene.

13. The modification method according to any one of claims 10-12, wherein the second nanoparticles comprise one or a combination of two or more of fumed nano-silica, nano-magnesia, nano-zinc oxide, nano-alumina, nano-iron oxide, nano-zirconia, or nano-titania.

14. The modification method according to any one of claims 10-13, wherein the nanoparticles further comprise: C) third nanoparticles, the third nanoparticles comprising one or a combination of two or more of nano-titanium boride, nano-boron nitride, nano-titanium carbide, or nano-calcium carbonate.

15. The modification method according to claim 4, wherein the a) comprises:

1) dispersing 0.00005 parts to 10 parts of the nanoparticles into the liquid phase environment, based on 100 parts by mass of the liquid phase environment, to obtain the nanoparticle liquid phase dispersion;
2) subsequently dispersing 1 part to 50 parts of the polyhydroxyalkanoate into the nanoparticle liquid phase dispersion.

16. The modification method according to claim 4, wherein the b) comprises:

i) dispersing 0.005 parts to 15 parts of the nanoparticles into the liquid phase environment, based on 100 parts by mass of the liquid phase environment, to obtain the nanoparticle liquid phase dispersion;
ii) dispersing 0.5 parts to 50 parts of the polyhydroxyalkanoate into the liquid phase environment, based on 100 parts by mass of the liquid phase environment, to obtain the polyhydroxyalkanoate liquid phase dispersion;
iii) dispersing 0.5 parts to 120 parts of the nanoparticle liquid phase dispersion into the polyhydroxyalkanoate liquid phase dispersion, based on 100 parts by mass of the polyhydroxyalkanoate liquid phase dispersion.

17. The modification method according to any one of claims 3-16, wherein the dispersion can be performed in 1 time to 10 times, or the dispersion comprises 1 dispersion run to 10 dispersion runs;
wherein the dispersion can be coarse dispersion and/or fine dispersion, one dispersion run is to perform one coarse dispersion and one fine dispersion.

18. The modification method according to any one of claims 1-17, wherein the polyhydroxyalkanoate comprises a homopolymer or a copolymer of monomers constituting the polyhydroxyalkanoate,
the monomers constituting the polyhydroxyalkanoate comprising one or a combination of two or more of 3-hydroxypropionic acid, 3-hydroxybutyric acid, 4-hydroxybutyric acid, 3-hydroxyvaleric acid, 5-hydroxyvaleric acid, 3-hydroxyhexanoic acid, 3-hydroxyoctanoic acid, 3-hydroxynonanoic acid, 3-hydroxydecanoic acid, or 3-hydroxydodecanoic acid.

19. The modification method according to claim 18, wherein the polyhydroxyalkanoate comprises one or a combination of two or more of PHB, PHV, P3HP, PHO, PHN, PHBV, P34HB, P3HB4HB5HV, P3HB4HB3HV, and PHBHHx.

20. The modification method according to any one of claims 3-19, wherein the liquid phase environment comprises one or a combination of two or more of water, ethanol, ethylene glycol, n-propanol, glycerol, acetone, isobutanol, 1,4-butanediol, methyl ethyl ketone, isoamyl alcohol, ethyl acetate, propyl acetate, butyl acetate, ethylene glycol diacetate, ethylene glycol dibutyrate, limonene, $N,N$-dimethylformamide, $N,N$-dimethylacetamide, dimethyl sulfoxide, 1-allyl-3-methylimidazolium chloride, 1-ethyl-3-methylimidazolium acetate, tributylmethylammonium bis(trifluoromethylsulfonyl)imide, 1-ethyl-3-methylimidazolium dicyanamide, 1-ethyl-3 -methylimidazolium sulfate, 1-ethyl-3 -methylimidazolium bis(trifluoromethylsulfonyl)imide, and 1-butyl-3-methylimidazole tetrafluoroborate.

21. The modification method according to any one of claims 3-20, wherein the pH of the liquid phase environment is 1.5 to 8.5.

22. The modification method according to any one of claims 3-21, wherein the process of dispersing the nanoparticles into the liquid phase environment or dispersing the polyhydroxyalkanoate into the liquid phase environment or dispersing the polyhydroxyalkanoate into the nanoparticle liquid phase dispersion or dispersing the nanoparticle liquid phase dispersion into the polyhydroxyalkanoate liquid phase dispersion further comprises adding an auxiliary agent.

23. The modification method according to claim 2 or 22, wherein the auxiliary agent comprises a dispersant,

preferably, the dispersant comprises an organic acid or an organic acid salt; further
preferably, the organic acid or the organic acid salt comprises one or a combination of two or more of acetic acid, acetate, propionic acid, propionate, stearic acid, citric acid, oleic acid, ricinoleic acid, stearate, citrate, oleate, or ricinoleate.

24. The modification method according to claim 23, wherein the dispersant further comprises one or a combination of two or more of polyethylene glycol, polypropylene glycol, dodecanethiol, sodium 2-ethylhexyl sulfosuccinate, methyl methacrylate, methylnaphthalene, or polyisobutylene succinimide.

25. The modification method according to any one of claim 2 or claims 22-24, wherein the auxiliary agent comprises one or a combination of two or more of a nucleating agent, a heat stabilizer, a chain extender, an antioxidant, a hydrolysis-resistant agent, an anti-blocking agent, a compatibilizer, a reinforcing agent, a crosslinking agent, a coupling agent, or a plasticizer.

26. A modified polyhydroxyalkanoate obtained by the modification method according to any one of claims 1-25.

## INTERNATIONAL SEARCH REPORT

| | International application No. |
|---|---|
| | **PCT/CN2023/114498** |

**A. CLASSIFICATION OF SUBJECT MATTER**

C08J 3/215(2006.01)i; C08J 5/00(2006.01)i; C08L 67/04(2006.01)i; C08K 3/04(2006.01)i; C08K 7/26(2006.01)i; C08K 3/22(2006.01)i; C08K 3/38(2006.01)i; C08K 3/28(2006.01)i; C08K 3/14(2006.01)i; C08L 1/02(2006.01)i; C08K 5/09(2006.01)i; C08K 5/098(2006.01)i

According to International Patent Classification (IPC) or to both national classification and IPC

**B. FIELDS SEARCHED**

Minimum documentation searched (classification system followed by classification symbols)

C08J3/-; C08L67/-; C08K3/-; C08K7/-; C08L1/-; C08K5/-

Documentation searched other than minimum documentation to the extent that such documents are included in the fields searched

Electronic data base consulted during the international search (name of data base and, where practicable, search terms used)

CNABS, CNTXT, DWPI, VEN, VCN, ENTXTC, WPABSC, CNKI, WOTXT, ISI-WEB OF SCIENCE, 万方, WANFANG: 北京微构工场生物技术有限公司, 武玉和, 许向东, 欧阳芸芸, 邓铁军, 薛明, 张涛, 杨继帅, 聚羟基脂肪酸酯, 纳米颗粒, 纳米粒子, 二氧化硅, 硅纳米, 石墨烯, 碳纳米管, 微晶纤维素, 氧化铝, 氧化镁, 氧化铁, 氧化锌, 氧化钛, 氧化锆, 丙三醇, 丙酮, 醋酸丙酯, 醋酸丁酯, 醋酸乙酯, 丁二醇, 二甲基甲酰胺, 二甲基亚砜, 二甲基乙酰胺, 磺酰亚胺盐, 甲基乙基酮, 柠檬烯, 溶剂, 水, 戊醇, 液相, 液相, 乙醇, 乙二醇, 乙二醇二丁酸脂, 乙二醇二乙酸酯, 异丁醇, 异戊醇, 正丙醇, 咪唑二氨腈, 咪唑硫酸乙酯盐, 咪唑氯盐, 咪唑乙酸盐, 羟基2w酸, 羟基脂肪酸, DMAC, DMF, DMSO, PHA, PHAs, polyhydroxyalkanoate, nano +, disper+, solution, aqueous

**C. DOCUMENTS CONSIDERED TO BE RELEVANT**

| Category* | Citation of document, with indication, where appropriate, of the relevant passages | Relevant to claim No. |
|---|---|---|
| PX | CN 115894981 A (BEIJING MICRO STRUCTURE WORKSHOP BIOTECHNOLOGY CO., LTD.) 04 April 2023 (2023-04-04) claims 1, 8, 10, and 14, and description, paragraphs [0022], [0025]-[0028], [0030], [0060]-[0064], and [0070]-[0072] | 1-26 |
| X | 仙峤 等 (XIAN, Qiao et al.). "纳米氧化锌制备及聚羟基脂肪酸酯性能改善 (Synthesis of Nano ZnO And Performance Reinforcement of Polyhydroxyalkanoate (PHA))" 电源技术 (Chinese Journal of Power Sources), Vol. 39, No. 4, 20 April 2015 (2015-04-20), pages 781-782 ISSN: 1002-087X, experiment part | 4-7, 15, 17-20, 22, 24-26 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 November 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| International application No. |
|---|
| **PCT/CN2023/114498** |

**C.    DOCUMENTS CONSIDERED TO BE RELEVANT**

| Category* | Citation of document, with indication, where appropriate, of the relevant passages | Relevant to claim No. |
|---|---|---|
| X | US 2014357788 A1 (UNIVERSITY OF MINNESOTA) 04 December 2014 (2014-12-04)<br>        claims 12 and 17 | 4-6, 8-9, 17-20, 22, 24-26 |
| A | WO 2022078365 A1 (SICHUAN UNIVERSITY OF LIGHT CHEMICAL TECHNOLOGY et al.) 21 April 2022 (2022-04-21)<br>        claims 1-7 | 1-26 |
| A | CN 105603569 A (TIANJIN POLYTECHNIC UNIVERSITY) 25 May 2016 (2016-05-25)<br>        claims 1-5 | 1-26 |
| A | CN 103602047 A (DALIAN LUYANG TECHNOLOGY DEVELOPMENT CO., LTD.) 26 February 2014 (2014-02-26)<br>        claim 1 | 1-26 |
| A | KR 102469115 B1 (CJ CHEILJEDANG CORP.) 21 November 2022 (2022-11-21)<br>        description, paragraphs [0007]-[0011] | 1-26 |
| A | CN 106751625 A (JIANGSU SOUTHERN PACKAGING CO., LTD. et al.) 31 May 2017 (2017-05-31)<br>        claims 1-9 | 1-26 |

Form PCT/ISA/210 (second sheet) (July 2022)

**INTERNATIONAL SEARCH REPORT**
Information on patent family members

International application No.

**PCT/CN2023/114498**

| Patent document cited in search report | | | Publication date (day/month/year) | Patent family member(s) | | | Publication date (day/month/year) |
|---|---|---|---|---|---|---|---|
| CN | 115894981 | A | 04 April 2023 | CN | 115894981 | B | 18 July 2023 |
| US | 2014357788 | A1 | 04 December 2014 | US | 9353238 | B2 | 31 May 2016 |
| WO | 2022078365 | A1 | 21 April 2022 | GB | 202306954 | D0 | 28 June 2023 |
| | | | | ZA | 202205085 | B | 28 September 2022 |
| CN | 105603569 | A | 25 May 2016 | CN | 105603569 | B | 31 October 2017 |
| CN | 103602047 | A | 26 February 2014 | CN | 103602047 | B | 23 September 2015 |
| KR | 102469115 | B1 | 21 November 2022 | WO | 2023008959 | A1 | 02 February 2023 |
| CN | 106751625 | A | 31 May 2017 | CN | 106751625 | B | 27 November 2018 |

Form PCT/ISA/210 (patent family annex) (July 2022)